Europäisches Patentamt

European Patent Office

Office européen des brevets

(11) Publication number: **0 231 259 B1**

(12) **EUROPEAN PATENT SPECIFICATION**

(45) Date of publication of patent specification: **09.12.92**

(21) Application number: **86904566.6**

(22) Date of filing: **25.06.86**

(51) Int. Cl.⁵: **H04B 1/16,** H04B 7/185, H04B 7/19, H04Q 1/30, H04Q 7/04, H04Q 9/00, G08B 3/10, G08B 5/22

(86) International application number: **PCT/US86/01352**

(87) International publication number: **WO 87/00994 (12.02.87 87/04)**

(54) **NATIONWIDE RADIO PAGING SYSTEM.**

(30) Priority: **08.08.85 US 763708**

(43) Date of publication of application:
**12.08.87 Bulletin 87/33**

(45) Publication of the grant of the patent:
**09.12.92 Bulletin 92/50**

(84) Designated Contracting States:
**AT BE CH DE FR GB IT LI LU NL SE**

(56) References cited:
EP-A- 0 040 954    US-A- 3 575 558
US-A- 3 902 022    US-A- 4 178 476
US-A- 4 273 962    US-A- 4 276 654
US-A- 4 408 099    US-A- 4 577 060
US-A- 4 597 104

Telephony, 8th August 1983, pages 50,54,56,58; C.E. Priddy : "Marketing a new system entails some trial and error, and changes"

(73) Proprietor: **METROCAST**
**11021 Via Fontera**
**San Diego, CA 92127(US)**

(72) Inventor: **CUBLEY, Dean, H.**
**15827 Craighurst**
**Houston, TX 77059(US)**
Inventor: **BATSON, Bartus, H.**
**3038 Green Tee**
**Pearland, TX 77581(US)**
Inventor: **DI NOTO, Thomas, D.**
**12863 Caminito del Canto**
**Del Mar, CA 92014(US)**
Inventor: **MACLEOD, John, B.**
**15727 Craighurst**
**Houston, TX 77059(US)**
Inventor: **SKOMER, Robert, M.**
**3848 Garden Lane**
**San Diego, CA 92106(US)**

(74) Representative: **Moore, Derek et al**
**Jensen & Son 70 Paul Street**
**London EC2A 4NA(GB)**

EP 0 231 259 B1

Electronics, vol. 52, no. 1, 4th January 1979, pages 67-68; "Paging system broadcasts nationwide on fm radio channel"

**Description**

BACKGROUND OF THE INVENTION

The present invention relates to the field of remote signaling systems, and more particularly, is directed to a nationwide radio paging system which interconnects presently existing local paging services into a nationwide network. The system permits subscribers to travel virtually anywhere in the country and continue to receive pages originated from their home service area.

The concept of a wide area paging system is not new. In fact, several such systems have been proposed and described in the prior art. One such system is described in U.S. Patent No. 3,575,558 issued to Leyburn. The Leyburn patent discloses a paging system which is said to permit simultaneous paging in more than one geographical area. The system comprises one or more storage centers which control a plurality of transmitters located in different geographical areas. When a storage center receives a page request, it consults its internal memory to determine in which areas the subscriber desires paging service. The storage center then transfers the paging information via telephone lines to dedicated transmitters serving the areas selected for paging by the subscriber.

Other wide area paging systems are disclosed in U.S. Patent No. 3,818,145 to Hanway and U.S. Patent No. 3,714,375 to Stover. The Hanway patent describes a paging system which extends the paging area by broadcasting the page over a plurality of transmitters. A page request received at one transmitter site is relayed to other transmitter sites. The transmitters are then activated to transmit the page. The Stover patent is directed to a paging system which transmits paging information over existing AM broadcast stations using a non-interferring phase modulation technique. Extended area coverage is achieved due to the relatively high power used by the broadcast station.

More sophisticated wide area paging system are disclosed in U.S. Patent No. 4,178,476 to Frost and Telephony, 08/08/83 pages 50-58, C.E. Priddy. The Frost patent is directed to a wide area paging system which provides local-only paging as well as wide area paging. In the local-only mode, the system operates in the same manner as conventional paging systems known prior to Frost. In the wide area paging mode, however, paging service may be transferred from one location to another by a transfer command entered into the system via a telephone hook-up. Thus, all pages originated anywhere within the system are transferred to the area where the subscriber is located. Broadcast of pages is temporarily suspended while the subscriber is in transit. Any pages which originate during this period are stored and then transferred to the area to which the subscriber has relocated when paging is reinstated on his arrival. The area from which the pages originate is also identified to the subscriber when they are broadcast. When a subscriber wishes to suspend paging service prior to travelling to another location, he first dials a predetermined telephone number to access the system. On receipt on an answer tone, the subscriber dials his unique identification number followed by a "suspend" digit. The system then suspends all paging to that subscriber and stores any pages received during the suspension period. When the subscriber reaches his destination, he makes another local telephone call to access the system in that area. Upon receipt of the answer tone the subscriber dials his unique identification number and a "reinstate" digit. Paging is then resumed and any pages originated during the time paging was suspended are forwarded to the new paging system and transmitted in the new area. Subsequent pages are transferred to the subscriber in that area until paging is again suspended and transferred to another area.

In the Priddy disclosure, a normal system of local paging is utilised, and when the subscriber wishes to leave his home area, the subscriber telephones the system and informs the system where he is going. The home local area system then stores any pages that are received for the subscriber, until the subscriber again phones the system to say that he has reached his destination. The home local area system then transfers the stored pages to the new local area system where the messages are transmitted.

Though the above-described wide area paging systems represent an improvement over the existing prior art at the time, they fail to provide a cost effective system for broadcasting pages over a wide area. For example, these systems all rely on dedicated equipment installations to process and broadcast paged. Thus, these systems cannot be easily and economically extended to cover additional service areas.

SUMMARY OF THE INVENTION

It is therefore the overall object of the present invention to provide a wide area paging system which is simple in operation and cost effective to implement.

It is a specific object of the present invention to provide a wide area paging system which uses existing radio common carrier paging systems to broadcast pages.

It is another specific object of the present invention to provide a wide area paging system which can economically process and broadcast alphanumeric, numeric and tone only messages to a remote signalling receiver.

It is a further specific object of the present invention to provide a wide area paging system which provides distribution of pages inexpensively through an orbiting satellite to Earth stations.

It is another specific object of the present invention to provide a wide area paging system which concentrates the paging data into digital packets in order to reduce data transmission requirements.

It is another specific object of the present invention to provide a wide area paging system wherein the subscriber can roam anywhere in the country covered by the system and continue to receive pages originated from his home service area.

It is a still further specific object of the present invention to provide a wide area paging system wherein the calling party is not required to know where the subscriber is physically located within the country in order to effect a page to the subscriber.

It is a still further specific object of the present invention to provide a wide area paging system wherein local paging as well as nationwide paging is provided.

It is another specific objection of the present invention to provide a wide area paging system wherein one paging receiver is used for local as well as nationwide pages.

It is another specific object of the present invention to provide a wide area paging system wherein the pages can be broadcast over any presently existing radio common carrier paging system within any of the RCC frequency bands.

It is a still further specific object of the present invention to provide a wide area paging system wherein the paging receiver automatically scans a plurality of frequency channels of presently existing radio common carrier or wireline paging systems for paging information.

These and other objects of the present invention are achieved by connecting presently existing local paging systems into a nationwide network. According to the present invention there is provided a wide area paging system, said system comprising: local page processing means within each of a plurality of geographical areas served by said wide area paging system, said local page processing means including page information receiving means for receiving said page information, control means for controlling at least one radio common carrier for broadcasting said page information throughout one of said geographical area; and central page processing means connected to each of said local page processing means for receiving copies of page information from said local page processing means; characterised in that said central page processing means includes distribution means by which said copies are distributed to said local processing means for broadcast by radio common carrier means in the said one geographical area and in a geographical area other than the said one geographical.

Local paging systems, or so-called radio common carriers (RCCs), now operate on frequencies in the low band VHF, UHF, and 900MHz band. The paging receivers used with these RCCs are tuned only to the frequency used by their respective RCC. Thus, one RCC's receivers cannot be used with another RCC operating on a different frequency. Moreover, in order to avoid interference, only one RCC can use the same frequency in the same geographical area at the same time. The RCCs are local-only systems as the subscriber can receive pages only while present in his assigned geographical area served by the RCC from which he has contracted for services.

The Federal Communications Commission (FCC) recently recognized that local-only paging systems fail to meet the paging needs of a mobile society and has taken steps to establish a structure for development of a nationwide common carrier paging system. Three frequency channels were set aside in the 900 MHz band for nationwide paging use. Local-only paging, however, will not be permitted on these frequencies under current FCC regulations. Each of the frequencies will be controlled by one licensed common carrier, the so-called 931 MHz "Network organizers," who will determined the structure of the system and decide such technical details as the modes of operation, signaling format and interconnection schemes. The services of the 931 MHz organizers will be distributed to subscribers through a local common carrier in each community, the so-called 931 MHz "Network operator." The 931 MHz operators will provide local page initiation and/or local distribution of nationwide pages on the frequency controlled by their respective organizer. In summary, the 931 MHz organizers will be the licensees of the frequencies, control their operation and furnish nationwide interconnection services to the local 931. MHz operators around the country. Though the designs vary, each system ultimately uses one of the three 931 MHz frequencies as the nationwide connecting link to deliver the paging information.

One of the drawbacks to the 931 MHz scheme is that it does not provide for local-only paging. Thus, a subscriber would have to carry two paging receivers, one for nationwide paging tuned to one of the three nationwide paging frequencies and one for local paging tuned to one of the local paging frequencies.

Secondly, the 931 MHz scheme is a totally new concept and equipment for its implementation presently exists in limited quantity only. Thus, each component of the system will have to be developed, tested and then produced in sufficient quantity to implement the 931 MHz system.

The nationwide paging system developed by applicants does not operate on the nationwide paging frequencies and thus avoids the above-mentioned drawbacks. The system of the invention basically permits connection of all of the presently existing local paging systems, i.e., radio common carriers or RCCs or wireline, by way of a satellite. Pages may then be broadcast in any of the major metropolitan areas of the United States using an existing local paging RCC. The system of the invention also permits customary local paging as well, using the same paging receiver.

In accordance with the present invention, the subscriber is assigned a paging telephone number in his home service area by the local RCC with whom he has contracted for service. When a caller wants to page this particular subscriber, the calling party dials the assigned telephone number using a standard DTMF telephone and is connected to an RCC site processor located in the same service area as the local RCC. Once the site processor has been accessed, the calling party relays a message or other information by use of the DTMF telephone or, in the case of alphanumeric data, by use of a standard ASCII keyboard with a CRT, personal computer, or similar device in conjunction with a telephone modem. Up to this point, the paging system of the invention processes both local and nationwide pages in the same manner. Means are provided, however, such that when a subscriber travels out of his local area, the system may be controlled to forward a copy of the subscriber's pages to another area. This is the nationwide paging aspect of the invention and these copies are referred to as nationwide pages. The system continues to broadcast the original pages locally even though the subscriber may already have left the area. Continued local broadcasting permits the subscriber to receive his pages up to the very moment he leaves the area. Such a feature is important since the subscriber is assured of receiving "that very last page". Thus the paging system of the present invention eliminates the problem of premature termination of local paging. Transfer of a copy of the subscriber's pages to another area is controlled in advance by the subscriber. Using a standard DTMF telephone, the subscriber merely inputs a special code that lets the RCC site processor know where a copy of the pages are to be routed. Incoming pages are then stored for a predetermined time to permit the subscriber to arrive at this destination and then are passed along to a local RCC which serves the new area for broadcast to the subscriber.

The RCC site processor stores a copy of each page that it processes for a predetermined time. Thus, during those periods when the subscriber is not available to receive pages, he does not have to worry about missing any pages. When the subscriber becomes available to receive pages, he merely informs the system that he wishes a rebroadcast of his pages. The system then passes along copies of any pages which were previously stored to a local RCC which serves the area where the subscriber is presently located for broadcast to the subscriber.

Where a nationwide page is to be sent, a copy of the original page is validated by the RCC site processor then routed via the most cost effective service (e.g., GTE TELENET telephone lines or satellite return link) to a traffic route processor located in a geographically convenient place. The traffic route processor receives packets of digital data (pages) from the various RCC site processors located around the country and temporarily stores this information in memory. The traffic route processor outputs the data to an uplink control processor which groups the page and/or data transmission requests into appropriate groups on a location and/or regional basis. Billing and other statistical data may also be compiled at this point. The digital data stream is then fed to a satellite uplink facility for transmission to a satellite. The data stream is then broadcast nationwide via the satellite. A nationwide network of telephone lines may also be used as an alternative to a satellite for distribution of the digital data. In each of the local cities participating in the system, the satellite downlink signal is received by a satellite receiver located at a receiver downlink facility at the same location as the RCC site processor for that city. The satellite receiver may be a direct broadcast (DBS) Ku-band receiver specially modified to receive digital data. The received data stream is input to a packet extractor which searches for address information unique to the local city. When local addresses are found, the packet extractor removes the data from the data stream and sorts it according to the local paging systems (RCCs) which will actually broadcast the paging information and then by subscriber.

A paging formatter then transforms the digital data received from the packet extractor into the proper format necessary to broadcast the paging information by the particular RCC or wireline. The paging formatter provides special coding on the transmitted signal which allows a subscriber's paging receiver to function on any of the frequency channels now assigned to local RCCs or telephone companies. The paging receiver may be a conventional paging receiver adapted with a scanning receiver module in accordance with the present invention. Thus, a subscriber has the ability to receive several nationwide pages while in a given geographical location but not necessarily from the same local RCC over the same frequency. This redundancy is designed into the system as a safeguard should a particular frequency not be available in a given city. Thus, the subscriber is assured that an alternate paging system frequency can be used. This system also permits use of the same paging receiver for every area of the country.

Applicants have also developed the electronic circuitry needed to convert a conventional fixed frequency paging receiver to a scanning receiver which scans across a plurality of paging frequency channels in any one of the paging frequency bands looking for paging information intended for a particular subscriber. A scanning type receiver is required because nationwide page information may be broadcast locally over any frequency available to broadcast the page. The same concept is applicable in other paging frequency bands. Therefore, a subscriber may receive a number of pages from different local RCCs, thus requiring a paging receiver which can tune all of the RCC frequencies in a given paging frequency band.

## BRIEF DESCRIPTION OF THE DRAWINGS

Figure 1 is an overall block diagram of the paging system of the present invention.

Figure 2 is a block diagram of the computer system which comprises some of the elements shown in Figure 1.

Figure 3 is an illustration of the paging record format which is created for each page processed by the paging system of the invention.

Figures 4 and 5 are more detailed illustrations of the paging record format for each page processed by the paging system of the invention.

Figure 6 is a more detailed illustration of the RCC site processor shown in Figure 1.

Figure 7 is a more detailed illustration of the up-link processor, traffic route processor, automatic page generator, and central site processor shown in Figure 1.

Figures 8-14 illustrate various signals and circuit diagrams associated with the scanning receiver of the present invention.

## DESCRIPTION OF THE PREFERRED EMBODIMENT

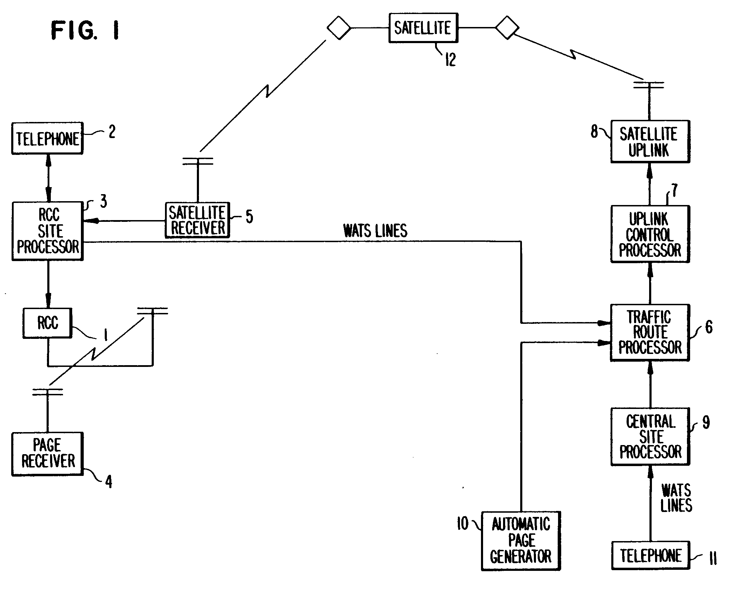

A block diagram illustrating the wide area paging system of the present invention is set forth in Figure 1. In accordance with the invention, each subscriber is assigned a paging telephone number in his home service area by the local RCC with whom he has contracted for service. As shown in Figure 1, the local RCC is indicated by reference No. 1. When a caller wishes to page a particular subscriber, the calling party dials the subscriber's assigned telephone number using standard DTMF telephone 2 or a suitable device connected through a telephone modem and is connected to RCC site processor 3. Each service area served by the system of the invention is provided with its own site processor. The site processor is connected to all of the local RCCs in the service area and, as described below, may format a page request for broadcast by any local RCC in its own local service area.

Once site processor 3 is accessed, the calling party enters the subscriber's paging receiver identification number using DTMF telephone 2. The calling party may also enter an alphanumeric message for the subscriber using a standard ASCII keyboard and CRT, personal computer, or similar device in conjunction with a telephone modem (not shown). For those calling parties not having access to facilities for entering alphanumeric messages, RCC 1 may be equipped with one or more operator consoles through which the calling party may request that an alphanumeric message be entered for the subscriber. Another alternative is to provide a console, modem and perhaps a printer to the subscriber for installation in his office. Office personnel could then originate the page and any alphanumeric message for the subscriber by typing in the message and pressing a "send" key. The console would be programmed to automatically dial site processor 3 to initiate the page and to send the alphanumeric message. Since many subscribers are likely to already have sophisticated computer systems, word processors or personal computers, such devices could also be used to initiate pages in much the same way as a dedicated paging installation. The required interface protocol would be provided to the subscriber so that his computer system could communicate with site processor 3.

When site processor 3 receives a page request, it must determine where the identified pager is located. If the pager is currently in the local service area, site processor 3 formats the paging information for broadcast in the local service area by local RCC 1. The page is then received by paging receiver 4 carried by the subscriber.

When the subscriber travels out of his local service area, the system may be controlled to forward a copy of the subscriber's pages to another area. This is the nationwide paging aspect of the invention and these copies are referred to as nationwide pages. The system continues to broadcast the original pages over local RCC 1 to which the subscriber is assigned even though the subscriber may already have left the area. Continued local broadcasting permits the subscriber to receive his pages up to the very moment paging receiver 4 is out of range of RCC 1. Thus the paging system of the present invention eliminates the problem of premature termination of local paging.

Transfer of a copy of the subscriber's pages to another area is controlled in advance by the subscriber. Using a standard DTMF telephone, such as telephone 2, the subscriber merely enters a transfer code that lets RCC site processor 3 know where a copy of the pages are to be routed. As will be described below, a copy of the page request is then transferred to traffic route processor 6 for distribution to another subscriber service area for broadcast in accordance with the subscriber's request.

A copy of each page request received by site processor 3 is stored for a predetermined period. These page copies may be retrieved by the subscriber at any time during this period by merely accessing site processor 3 using DTMF telephone 2 and entering a rebroadcast code. Site processor 3 then causes the rebroadcast of any pages which were previously stored.

When site processor 3 determines that a page is to be routed to another service area for broadcast, a copy of the original page is validated by RCC site processor 3, i.e., checked for errors and corrected if necessary, then formatted into packets of digital information. The packets of information are routed via the most cost effective communication link (e.g., GTE TELENET or a satellite return link) to traffic route processor 6. Traffic route processor 6, along with uplink processor 7, satellite uplink 8, central site processor 9 and automatic page generator 10, is located in a geographically convenient place for all of the local site processors 3 in the system. Traffic route processor 6 receives the packets of digital data page requests and page messages from the various site processors 3 in the system, checks and corrects the data if necessary, then temporarily stores it for transfer to uplink control processor 7 at the appropriate time. Uplink control processor 7 groups the data into data packets on a location and/or regional basis. Billing and other statistical data may also be compiled at this time. The data packets are then transferred to satellite uplink 8 for transmission to satellite 12 for broadcast nationwide. The satellite downlink signal is received in each of the subscriber service areas by satellite receiver 5 located at a receiver downlink facility at the same location as RCC site processor 3 for that service area. Satellite receiver 5 may be a direct broadcast (DBS) Ku-band receiver specially modified to receive digital data. The received data packets are input to site processor 3 which searches for address information unique to the local service area for the particular site processor. When data packets with a local address are found, site processor 3 removes those data packets from the data stream and sorts them according to the local RCCs which will actually broadcast the paging information and then by subscriber. Site processor 3 then converts the received information into local transmission page format for forwarding to the appropriate RCC 1 for broadcast.

As shown in Figure 1, the nationwide paging system of the present invention also includes automatic page generator 10. Page generator 10 maintains a list of events that could cause pages to be generated, for a particular subscriber. These automatic pages fall into two categories: time initiated pages and event initiated pages. Time initiated pages are pages that must be broadcast at a specific time. Pages of this type include wake-up calls, birthday notices, reminders to take medication, etc. When the event time occurs, page generator 10 sends a page request to traffic route processor 6 for distribution via satellite 12 to the appropriate local service area for broadcast. Event initiated pages are pages that must be broadcast when an event occurs. For example, page generator 10 could be programmed to monitor the stock market "ticker-tape" telephone lines. When the price of a specified stock value changes by a certain amount, a page request could be generated announcing the change to the subscriber requesting the information.

The paging system of the invention also includes central site processor 9 which is very similar in operation to RCC site processor 3. However, central site processor 9 is connected to WATS lines rather than local telephone lines. The primary function of central site processor 9 is to allow remote programming changes of pager location. In those cases where a subscriber is already in a remote service area and wishes to route pages to another remote service area, the change can be effected by accessing central site processor 9 using any DTMF telephone such as telephone 11 shown in Figure 1. Central site processor 9 also includes voice generation equipment to allow auditory verification of pager location changes. The voice generation equipment also has the capacity of prompting the calling party for the information required to effect a pager location change.

At least one of the local site processors 3 of the invention includes monitoring facilities. This particular site processor, hereafter referred to as the "monitoring site processor," has the capability of monitoring all other site processors within the system. Each site processor may be accessed by the monitoring site processor to obtain detailed status information. Each site processor also periodically sends a "page" through the system containing current status information destined for the monitoring site processor. In the event that an out-of-range condition occurs anywhere in the system, the site processor which detects the condition immediately notifies the monitoring site processor of the condition by accessing a local telephone line and dialing the monitoring site processor with a service notice. The monitoring site processor stores the service notice and the status information from each site processor for "trend analysis" in order to pinpoint potential service problems. The monitoring site processor can also initiate a partial or complete warm or cold start reset of any site processor in the system.

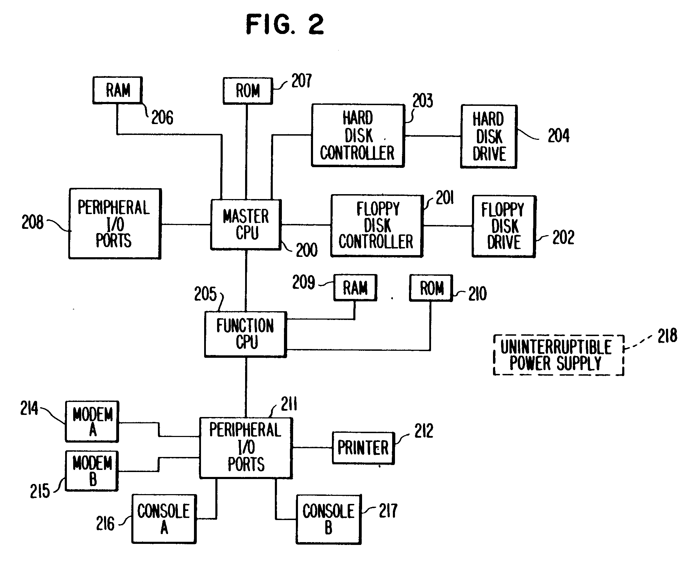

RCC site processor 3, automatic page generator 10, central site processor 9, traffic route processor 6, and uplink control processor 7 all comprise a computer system which includes a number of interconnected elements as shown in Figure 2. Each computer system comprises master central processing unit (CPU) 200, floppy disk controller 201 and associated floppy disk drive 202, hard disk controller 203 and associated hard disk drive 204 and at least one function CPU 205. Floppy disk drive 202 and hard disk drive 204 provide mass storage and retrieval of utility programs and data. Master CPU 200 provides internal data transfer between all function CPUs (205) and controls floppy disk controller 201 and hard disk controller 203. Disk controllers 201 and 203 provide the control signals and I/O data path interfaces for floppy disk drive 202 and hard disk drive 204, respectively. Function CPUs (205) actually perform the work that the outside world calls upon the computer system to do such as the various functions performed by the site processors in processing a page request. Master CPU 200 merely supervises the operation of the function CPUs (205) and, in doing so, takes care of much of the routine housekeeping or so-called overhead for the computer system. Thus, function CPUs (205) can operate more efficiently in performing their assigned tasks.

As shown in Figure 2, master CPU 200 also includes RAM memory 206 and ROM memory 207 where instructions and temporary data storage areas of a computer program reside and peripheral I/O ports 208 which allow the master CPU to communicate with the outside world. Function CPUs (205) also has its own RAM 209 and ROM 210 where instructions and temporary data storage areas of a computer program reside and peripheral I/O ports 211 which allow the function CPUs to communicate with the outside world as well through such devices as modems 214 and 215, consoles 216 and 217, and printer 212. Consoles 216 and 217 are interactive terminals which allow the computer system to communicate with a control operator. The computer system is electrically powered by uninterruptible power supply 216 shown in phantom in Figure 2. Power supply 218 maintains operating voltage to the computer system in the event of a local power outage. It also prevents damaging power line transients from reaching the computer system. Power supply 218 includes sufficient battery backup to operate the computer system for up to 15 minutes. This length may be increased if necessary by providing additional battery packs.

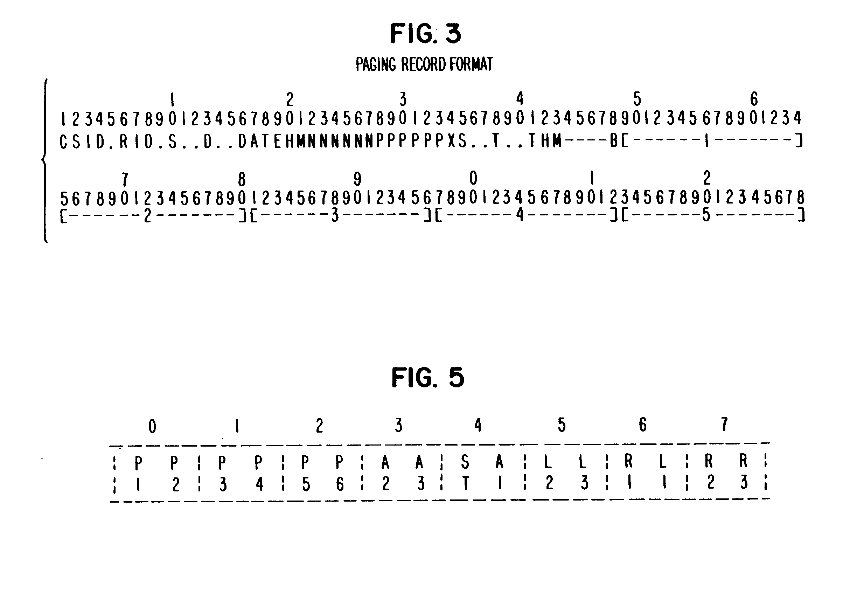

The wide area paging system of the present invention requires generation and internal storage of at least one paging record for each page processed by the system and a paging record control block. Paging records and paging record control blocks are the primary data files used by the various function CPUs. A paging record contains information pertinent to the page it represents in a format that can be used by each element of the system and which can be deciphered into a 'Page Record Line' for output on a printing device. The paging record format of the present invention is shown in Figure 3. As shown, the format provides a number of data blocks for each page including packet indentification, package routing control, sortable date and time tracers, pager account identification, data type identification, send verification, data block integrity verification and variable length messages. All of this information is stored in each page record.

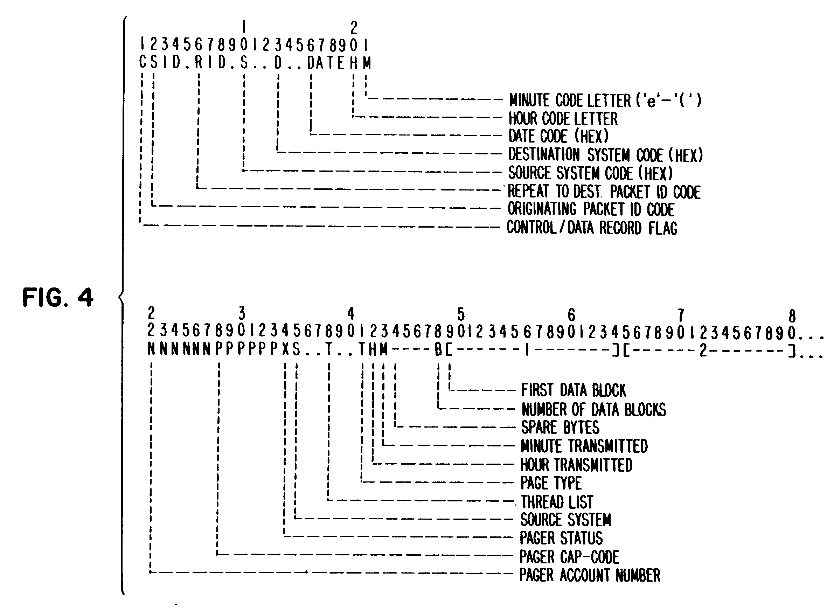

The first 32 bytes of each page record contain the control information which controls processing of the page through the system. The page record format is shown in Figure 4. The various bytes are described below with the byte number or range of bytes in parentheses.

CONTROL/DATA RECORD FLAG - (1) This byte is set to the ASCII character ' ' (5EH) to indicate the start of a 128 byte record if the first 32 bytes contain control information. Any other character defines the record as a continuation of a previous data record. If there are less than 96 data characters in the message, there will be no continuing data records. If there are more than 96 characters in the record, there will be continuing data records containing up to 128 data characters per record. The ' ' character is the only character that may not be used in any data message.

ORIGINATING SYSTEM PACKET ID CODE - (2-5) These four bytes contain a hexadecimal (OOOO-OFFF) packet ID code. Each packet of data sent to the local control groups or the master control group is ID coded sequentially. If a control group receives a packet that has a higher ID code than expected, it will request a repeat of the missing packet(s). If an additional data record is required for the message data, the second data record is assigned the next packet ID code. When the value exceeds OFFFH, the ID code rolls-over to 0000H. This allows tracking up to 4096 records.

REPEAT-TO DESTINATION PACKET ID CODE - (6-9) These four bytes contain a hexadecimal (OOOO-OFFF) packet ID code. Each packet of data sent by a control group to another control group is ID coded sequentially. The destination control group has a separate counter. If the destination control group receives a packet that has a higher ID code than expected, it will request a repeat of the missing packet(s). If an additional data record is required for the message data, the second data record is assigned the next packet ID code. When the value exceeds OFFFH, the ID code rolls-over to OOOOH. This allows tracking up to 4096 records.

OWNER SYSTEM CODE - (10-12) These three bytes contain the hexadecimal value of the source system (RCC cite location) where the page originated. Three bytes allow up to 4096 source locations (OOOH-FFFH).

DESTINATION SYSTEM CODE - (13-15) These three bytes contain the hexadecimal value of the destination system (RCC cite location) where the page is to be transmitted. Three bytes allow up to 4096 destination stations (OOOH-OFFH).

To preserve space in the data records, day, month, and year are encoded in a four byte hexadeciminal form, while the hour and minute information is encoded into letters. The ASCII letter ' ' is the starting point for all letter codes. The letter is equal to '0' in the case of hours and minutes. The date code starts with day 1 (OOO1H) equal to 01JAN48. This format allows very specific definition of a date and time in only six bytes.

All time references internally are based on Greenwich Mean Time, the international standard. Externally, all time references are based on local time, as defined by the system location. This eliminates ambiguities associated with the different time zones.

DATE CODE - (16-19) - The date code is a four byte entry representing an integer in hexadecimal. Day 0 is 31DEC47. The Date Code is the day the page originated.

HOUR CODE LETTER - (20) - The hour code letter is the hour the page originated (' ' to 'W").

MINUTE CODE LETTER - (21) - The minute code letter is the minute the page originated (' ' to ' ').

PAGER ACCOUNT NUMBER - (22-27) - The pager account number defines the 'look-up' account record which contains the Pager Cap Code (described below) and other information (see Account Record Information). The range of this number is 000000 to 999999. Hex characters A-F may also be placed in the Cap Code, allowing 16,777,200 possible Cap Codes to be handled by the system. Each RCC Site System has a look-up file containing the Cap Code of every pager in the system. When a packet data is received and formatted by the site processor, the site processor looks up the account number, obtains the Cap Code and transmits the page.

PAGER CAP CODE - (28-33) The Pager Cap Code is the unique identifier which causes the local site processor to generate a specific bit pattern for transmission on the RCC transmitter to set off a pager. The normal Cap Code contains the numbers 0-9, but the system will allow full hexadeciminal 0-9, A-F entry. These codes are not defined In POCSAG, and may therefore be used by any other process in the system.

PAGER STATUS - (34) - The pager status is not fully defined. The presence of a '0' as the pager status code will, however, inhibit any paging activities regarding this pager account, and an Invalid Pager Number' error will be displayed.

SOURCE SYSTEM - (35-37) - The source system code identifies the local RCC where the current Page Record originated. (See Owner System)

THREAD LIST - (38-40) - The thread list is used in local systems to keep track of pages to the same pager account numbers in the local current page buffer. It is always set to '000' by the site processor for transmission to network systems.

PAGE TYPE CODE - (41) - This byte defines the type of data stored in the data blocks. The code is a letter, starting with the character ' @ '. The currently assigning paging codes are:

@ None - No data is stored in the data records
A Numeric - Numeric only data is stored
B Alphanumeric - Alpha and numeric data is stored
C Update - Changes to Pager Control Block File
D Time Set - Periodic clock set for all systems

HOUR PAGE SENT - (42) - This byte contains, after transmission of the page at the terminating site, the Hour Code letter of the hour the page was sent.

MINUTE PAGE SENT - (42) - This byte contains, after transmission of the page at the terminating site, the Minute Code letter of the minute the page was sent.

NOT USED - (44-47) - This range of bytes is presently not defined.

NUMBER OF BLOCKS - (48) - This byte contains the nunber of data blocks in the record. The starting point is '0' (30h).

DATA BLOCKS - The subsequent data blocks are 16 bytes each. For numeric data blocks, normally only one block is required. For alphanumeric data blocks, any number of blocks may be appended, up to the range of the data block character, which is ' ' (7Eh), or 78 data blocks. Thus, an alphanumeric message for the subscriber maycontain up to 1248 (78*16) characters. Five data blocks, or 80 characters, reside in the first record, and will suffice for most alphanumeric messages.

Each record is sent from one station to another station over whatever medium is available. Due to the 'printing' nature of the data record, simple monitors may be attached to the transmission link at any point to determine if data integrity is being maintained.

If a data block contains fewer than the maximum number of characters expected (16), then the dta block is filled with null characters (00H). A complete data block of 16 bytes is always transmitted if there are any characters within the block.

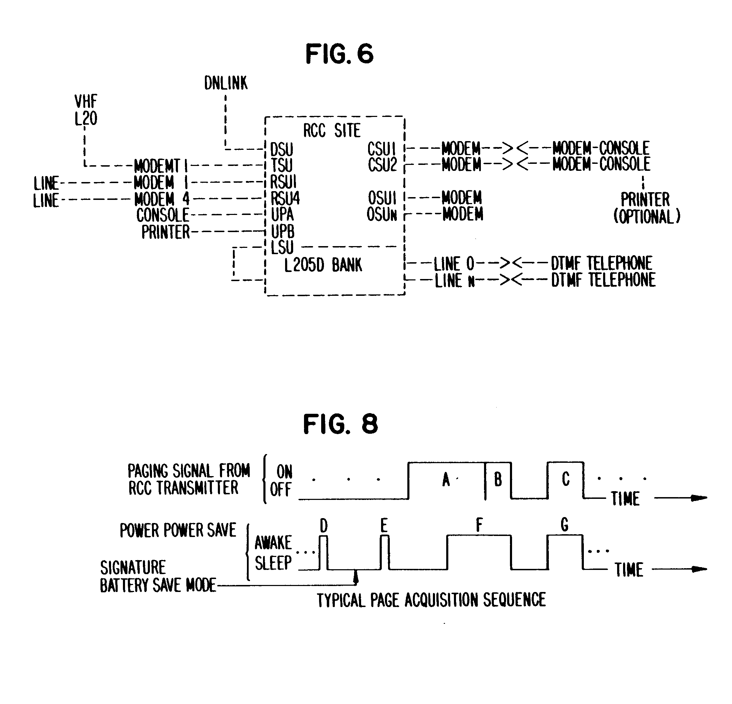

The Pager Control Block is the primary file which controls all pager activities. It is located in every system, and is the same in all systems, each change to the pager control block file (except record pointer changes) forces a national update of all pager control block files. Each record in the Pager Control Block is eight bytes in length. The format is shown in Figure 5.

| P1-P6 - | Pager Cap Code in modified BCD format (O-F) |
| A1-A3 - | Owner System. The system to receive accounting records when a page is placed to the pager. |
| ST - | Status and Control characters. |
| L1-L3 - | Current Location System of the Pager. |
| R1-R3 - | Last Page Record Processed locally for their Pager |

The Data Record is the method used by the system to transfer all data within the system. The type identifier is utilized to identify the type of data in the record. This allows files to be up-dated to all systems from the Uplink at the same time.

Figure 6 is a further illustration of RCC site processor 3 shown in Figure 1. As described above and shown in Figure 2, site processor 3 is a computer system which performs a number of functions with a plurality of function CPUs (205). Each function is labelled in Figure 6 to identify a particular function CPU within site processor 3. As shown in Figure 6, and in conjunction with Figure 1, the DownLink Service Unit (DSU) function CPU is connected to the output of satallite receiver 5. The DownLink Service Unit is actually two to four units. The two units work in conjunction with each other, and cross monitor receiver 5. Only one of the units is on-line at any given time.

One DownLink Service Unit constantly monitors the data flow from the satellite. When a data record address is "all" or when the correct system address is decoded in either the source or destination system field, then the receiving DSU signals the next DSU to begin decoding, stores the current record, and ceases monitoring the data flow. The received record is checked for accuracy, corrected if necessary, then "stored" for processing by the TSU, and an "event" code is sent to the TSU. Where data records are involved, a Data File Follows record is sent by up-link controller 16 followed by up to 32,768 bytes of data. The DSU decodes and stores the block of data in the appropriate data file at the location specified in the DATA FILE FOLLOWS Page Record. No actual pages will be sent during the period that a data file transfer is occurring to any RCC site. All RCC site processors may receive the same data file at the same time by using the 'All Call' destination address. Additional functions performed by site processor 3 are set forth below.

TSU - Terminal Service Unit

The Terminal Service Unit provides the interface to the area RCC transmitter(s) it controls. When an 'event' signal is received from the DSU, the TSU gets the paging record from the PAGREC file, checks to see if any records are missing (generating a RSUERR FIFD record for processing by the RSU if so) obtains and processes the page record. The TSU loads until one of several conditions occurs. If the paging block becomes full, or 'MAXTM1' elapses prior to the filling of a paging block, then the paging output sequence will begin. On completion of the paging output sequence, the TSU writes a 'page complete' record to the ASU FIFO for accounting functions.

RSU - Remote Service Unit

The Remote Service Unit provides modem connection to other 'system' sites, using the PAGREC format. System routing is accomplished by the programming of the 'dial' number. When a page or data record is queued for output of the 'system' the local modem is activated. The appropriate 'system' number is dialed, and the data is transferred to the remote device. XON/XOFF handshake is provided. Complete Data Files may be transferrd between machines by the RSU, using a data file transfer format.

LSU - Line Service Unit

The Line Service Unit controls a bank of interface circuits for telephone input of numeric only pages. The interface circuits are polled, with periodic output of paging records to the PAGREC file.

CSU - Customer Service Unit

The Customer Service Unit provides remote page entry and look-up at 300 or 1200 baud using a modem. The CSU provides two ports per slave. The accessing device or user identifies itself at the onset of the session, then may enter a page or interrogate the current page list for previous pages to a given account. System and user ID's are required for operation. The following functions are provided:

MANUAL PAGE ENTRY - If the calling device provides a 'manual flagged' access ID, then the calling device will be prompted based upon the device type. Screen formatting is provided this way. Each 'manual' device type has a unique identifier to allow the module to send the correct control codes to perform screen formatting for that type device. If the module has no instruction set for that device, then the default 'question/answer' mode will be used. This is most applicable to 'dumb' termination operations.

AUTOMATIC PAGE ENTRY - If the calling device provides an 'automatic flagged' access ID, then the subsequent data will be assumed to be pre-formatted and no prompts will be issued. The calling device may then enter up to sixteen pages in the PAGREC format. The date and time data is not provided by the accessing unit. On completion of the data input, the CSU will disconnect.

PAGE LOOK-UP - Look up of pages previously processed is provided. If the calling device is manual, then the caller will be prompted for the look-up information. If the accessing device is automatic, then the lead-in code will request the look-up of previous pages. The Pager Control Block and all stored pages will be output to the accessing device. If 'manual', then the CSU will pause following each screen of data and await a prompt from the calling party to display the next screen.

OSU - Operator Service Unit

The Operator Service Unit runs in slave with both serial ports connected to 'consoles'. Each port may be connected to a moden for off-site operation at 1200 baud, or to a local console for on-site operation at 9600 baud. The basic functions of the OSU are:

(START-UP) - Local consoles will be assumed if no operator dial number is provided, and default baud rate will be 9600. If an operator dial number is provided, then the module will attempt connection to the operator port until connnection is made. Operator port baud rate will default to 1200 baud, but 300 baud may be selected.

MEMU - Once a connection is established, a menu will be displayed, and the operator will be prompted to select one of the following functions:

PAGE ENTRY - Manual Page Entry -

LOOK-UP A PAGER - Looks up and displays the basic control information for any pager on the system. This includes the Cap-Code, the Owner system, the Current Location system, and previous pages to the pager (local or nationwide).

CHANGE PAGER LOCATION - Looks up a Pager Control Block, and allows the destination system address to be changed. This requires only that the operator knows the area code and one exchange of the destination city. The destination system is the determined by the system and the city name is displayed prior to termination of the sequence.

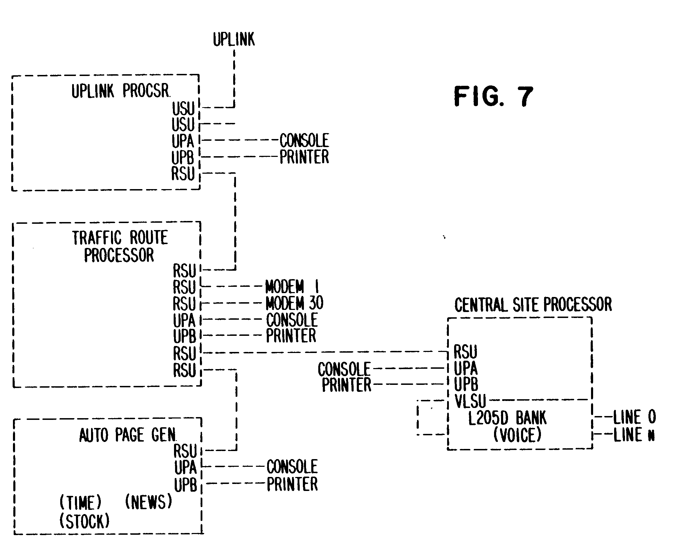

Figure 7 is a further illustration of uplink control processor 7, traffic route processor 6, automatic page generator 10 and central site processor 9 shown in Figure 1. In addition to the above-described functions, the following functions are provided by function CPU's in these computer systems.

VLSU - Voice Line Service Unit

The Voice Line Service Unit is similar to the LSU Line Service Unit. It has the additional capability of voice generation to provide automatic prompting to the accessing customer for Pager Address Location Changes.

Two methods of voice generation may be used. In one, a 'phonetic' voice synthesizer is used, in the other, direct voice storage and recall is used.

11

The 'phonetic' synthesizer requires much less processor overhead than the direct storage approach. The appropriate 'phonemes' are selected to provide the words, stored in the hard disk, and output at the time required.

In the 'direct' voice storage method, each voice message is recorded locally, stored on a hard disk, and provided to one of eight voice generator circuits. When a voice message is required, the TSU obtains the voice data from the hard disk and outputs it to the voice generator.

SSU - Status Service Unit

The Status Service Unit constantly checks the operation of all other units in the system, and connects to a console for display of the system status. It's console data may be routed to either it's local console (default), or on access by the central monitoring facility, it's console data may be routed over the modem line to the central monitoring facility. All function CPUs in the system generate periodic 'ticks' and send a status message to the SSU at a pre-determined interval (e.g., five seconds). If the SSU fails to receive a 'tick' from a particular function CPU, it sends an 'interrogation' to that function CPU, which, if not returned within five seconds, will cause 1) a message to the monitoring site processor that a failure has occurred in the faulty function CPU, and 2) a re-boot (total reset) of the affected function CPU. The SSU also outputs 'ticks' to an external device which is capable of performing a complete local system hardware reset. If the SSU fails to tickle the hardware device within thirty seconds, the hardware reset is initiated.

The SSU maintains a log of the status of each function CPU. If one function CPU becomes backlogged, it can assign another function CPU to the backlogged function. Any inequity between the function CPUs is flagged and output to the monitoring site processor.

The SSU also monitors the external hardware monitoring device, and periodically generates 'status' pages to the monitoring site processor via the national network.

ASU - Accounting Service Unit

The Accounting Service Unit receives the 'page complete' record from the TSU and updates the appropriate account file. On completion of the update, the ASU sends an 'accounting complete' record to the RSUACT FIFO for later (polled) transmission to the master system. It is typically multiplexed in with an SSU.

DBU - Data Base Unit (optional)

The Data Base Unit provides complete control of the data records pertaining to each account and pager. It allows up to 255 data bases per logical drive partition, up to 1,048,580 records per data base, up to 255 elements per data data record, and up to 255 data characters per element. High-speed indexing and look-up may be performed based on any of the data elements within the data base.

A page request is processed through the system in the following manner. For numeric only pages, the subscriber places a numeric only call by dialing the local access line assigned to that pager and inputting 1) the desired pager number, then 2) the desired display data (if any).

The local system RCC site processor receives the call request, then determines where the pager is located (station address). If the pager is currently located within range of the local station, the local system processes the call locally, and stores a Page Record for later transmission to the traffic site processor for billing control. If, however, the pager is not located within range of the local station the local system generates a Page Record for immediate transmission to the traffic route processor.

Pages containing alphanumeric data (letters A-Z, numbers, and punctuation) require a different method of input to the system since this information is not possible to input using a standard 'touch-tone' telephone. Four methods are provided:

Local Operator - The RCC may have one or more 'Operator Consoles' installed at the RCC site. Since most RCC's provide answering service to their customers in conjunction with paging, this should not present a problem. The person placing the page (caller) dials the local number of the answering service and requests a page. The operator places the page by inputting the pager number and the alphanumeric data message via an operator console. The system then processes the call. The local operator is connected to the RCC site processor through the OSU.

Encoder - An Encoder device comprised of a console, modem, and possibly a printer, is supplied to the user for installation in his office. The user's officer personnel would originate the page by typing in the message and pressing the 'send' key. The Encoder then dials the local modem access line of the local RCC, or the 800 service number (if provided), and sends the call request to the local RCC. The system then processes the call. The Encoder connects to the RCC site processor through the CSU Module.

Computer Interconnect - Since many users of the system would already have sophisticated computer systems, word processors, or personal computers, these devices would be allowed access to the system to facilitate page processing. Operation would be similar to operation under 'Encoder'. The interface protocol would be provided to the user so that the user's system could be programmed to communicate with the RCC site processor. The computer interconnect connects to the RCC site processor through the CSU.

Automatic - Automatic pages could be placed by the system itself signalling an 'event occurrence'. The system may be connected to one or more news wire services and stock exchange wire services. The user would request, for Instance, a page in the event a word or combination of words appears on the wire service, or in the event of a stock value change in exces of a requested amount, or at a predetermined date and time. When the event occurs, the system places the page. Also, time sensitive events like birthdays could be programmed in advance. On the desired date the pre-programmed page would be placed. The automatic pages are generated in automatic page generator 10 which connects to traffic route processor 6 via an RSU.

Repeat - In the event that the user feels that he has missed a page for any reason, he may dial into the local RCC and, using a special access code, request that all of his pages be repeated. This would be valuable since the pager would probably be incapable of receiving pages in an aircraft traveling between two service areas. The stored pages would be repeated sequentially in order of occurrence.

After a page request is made as described above, it is processed through the system in the following manner. As also described above, each page request generates a Page Record. The Page Record is standard throughout the system, and contains the necesary information to process the page throughout the system. The Page Record is processed locally for local pages by the RCC site processor.

Nationwide pages are processed through the remotely located traffic route processor. When a page request is made, the local RCC site processor seizes one of it's Remote Data Lines and dials into one of the lines connected to the traffic route processor. These lines may be a bank of national and state 800 numbers in rotary configuration, or a series of data lines provided by a data service, such as GTE telenet. The traffic route processor answers the call and inputs the Page Record. Included in the Page Record is the current pager station address, programmed by the user on the local access lines using a 'touch-tone' telephone. The traffic route processor receives the Page Records, checks and corrects it, stores it, then forwards it to the uplink controller.

The uplink controller assembles the Page Records into a data packet which is transmitted by the Uplink equipment to the satellite along with all other 'current' Page Records. The satellite receives the data packet and repeats it to all RCC Site Processors simultaneously. Each RCC Site Processor extracts the page and data packet(s) intended for it from the data packet stream, converts the received page record(s) into local transmission page format, then forwards the formatted page data to the TSU for output on the local transmitter.

The TSU handshakes with other control equipment working with the local RCC transmitter, and then transmits the local page over the RCC transmitter when a time slot becomes available. Thus, the page is completed.

Where a pager location change is desired, the user dials into the local system operator (if provided) who selects the 'Change Pager' function on the local console of the RCC site processor. The change pager function prompts the operator for the information pertinent to the change and the operator asks the user for the information, then imputs it to the system.

Where the subscriber is already in a remote location and wishes to transfer his pages to another service area, he dials into the central site processor and is prompted for the function he desires. He inputs his pager number and the area code and exchange of someone he is going to visit in the destination city. The central site processor responds with the city name (for handshake) and the level of coverage in the area. The user also is prompted for the pertinent times of service, or an itinerary may be programmed weeks in advance if desired.

The local station address is defined by a number of six digit identifiers, the six digits are the local station's site address and consist of the area code and all exchanges served by that RCC site processor. All local stations have a 'look-up' table of all exchanges where nationwide paging service is provided. This simplifies the system for the user, since he probably knows the number of someone in the city he is going to visit. Ideally, the user would input a 'number where he can be reached' in the city he is going to. If service is not provided in that exchange, then the system can immediately notify the user. The user can then decide whether to 'turn-off' his pager by inputting an area code / exchange of '000000'. This will prevent 'missed pages' from occuring without the user knowing in advance that he will be unable to receive the page, and it will prevent the user being billed for pages he did not receive because of national paging system limitations. In the event that more than one RCC Site Processor serves the same exchanges, the Traffic Route Processor will alternate the transmission between the RCC's to provide equal air time utilization.

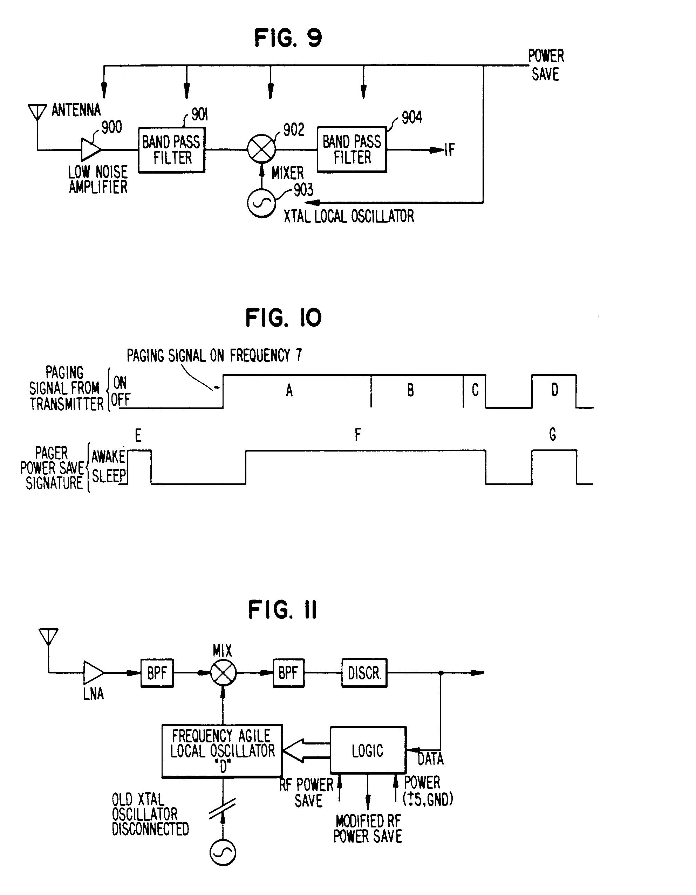

Paging receiver 4 shown in Figure 1 is a conventional paging receiver which has been modified in accordance with the present invention to permit scanning of the RCC frequency channels. Such a conventional receiver can be selected from amoug a number of receivers known in the art including receiver model number D-4-ALPHA manufactured by NEC. The NEC D-4-ALPHA pager is an FM-FSK alpha-numeric pager capable of receiving a single modulated carrier. In order to conserve battery life, certain sections of the pager's subsystems are turn off for a majority of the time and turned on only when absolutely necessary. The turn-off period (hereafter referred to as "sleep") is controlled by a "watchdog" timer resident in the pager's VLS1 components. The sleep-awake duty cycle is arranged so that the pager is given ample opportunity to recognize an incoming page while maximizing battery power conservation. An example of a typical page acquisition sequence is shown in Figure 8.

The upper half of Figure 8 represents the signal transmitted by the RCC. Section A is the page preamble (typically a single tone) which precedes all paging messages. The purpose of the preamble is to cause all receiving pagers to awaken and begin looking for the synchronization codework (B) which identifies uniquely the pager which is being signaled. In addition to this function, the synchronization codeword also specified the time domain location of the message packet C.

The lower half of Figure 8 represents the pager's power save response to the transmitted signal. The two short duration pulses (D, E) represent the normal sleep process the pager uses to conserve batter life. Should the preamble (A) be present while the pager is awake, the RF power save signal maintains the pager in an awake status in synchronous with the synchronization codeword (F) and subsequent message packets (G, etc.). Should the pager fail to recognize the synchronization codeword (as would be the case during periods of heavy radio interferences, a weak signal or an invalid synchronization codeword) or message packet, the pager returns to the normal sleep-long/awake-short battery save status.

Among the pager subsystems which are slaved to the power save awake/sleep cycle is the RF "front end." This section of the pager is shown in Figure 9.

The receiving stages of the pager are implemented as simply as possible while maintaining high selectivity and sensitivity. Low noise amplifier 900 is a single stage RF transistor amplifier. Band pass filter stage 901 is a cascade of factory tuned "tank" circuits. The first IF (21.4 MHz) is obtained from a downconverter made up of band pass filter 901, local oscillator 903 and mixer 902 and band pass filter 904. Mixer 902 is a BJT (bipolar junction transistor) mixer which is biased for nonlinear operation. Local oscillator 903 is a fixed frequency crystal oscillator which supplies the down conversion frequency. It is local oscillator 903 which is replaced by a scanning local oscillator module in accordance with the present invention. The pager IF is subsequently passed to the FM discriminator (not shown) for demodulation. In order to turn the front end on and off (awake/sleep), the RF power save signal from the NEC VLS1 circuit drives the base of a switching transistor. The transistor switches the DC supply voltage rail to the elements shown in Figure 9.

Modification of the receiver to permit reception of any of a plurality of separate RF signals can be accomplished in accordance with the present invention with little modification to the original pager design. Further, the useful battery life for the modified pager should be no less than 150 hours using a size "AA" alkaline 1.5 volt cell. Lastly, the original design performance specifications of the pager are maintained.

The sleep/awake signature of the modified pager and RCC transmitted signal is discussed in Figure 10. The upper half of Figure 10 represents the signal transmitted by the RCC. Section A is a special preamble unique to the RCC's which support the scanning pager network. This preamble is a single tone (alternating 1, 0 bit pattern) of a duration sufficiently long for a pager to completely scan all frequencies at least once. Sections B, C and D are the page preamble, synchronization codeword, and message packet, respectively. These last 3 sections are the same as their counterparts in Figure 8.

The lower half of Figure 10 represents the modified pager's response to the transmitted signal. The awake period E is the period of the preamble search at each frequency. In the above example, the special preamble A is searched for and not found until frequency #7 shown in Table 1 for example is reached by the pager. At this point, the pager remains awake through periods F and G and subsequent message packets. Table 1 is a listing of several frequencies in the VHF band which the pager of the invention can scan. This list is by no means inclusive and is presented by way of example only. Moreover, the pager of the invention may also be used to scan a plurality of frequencies in other bands as well.

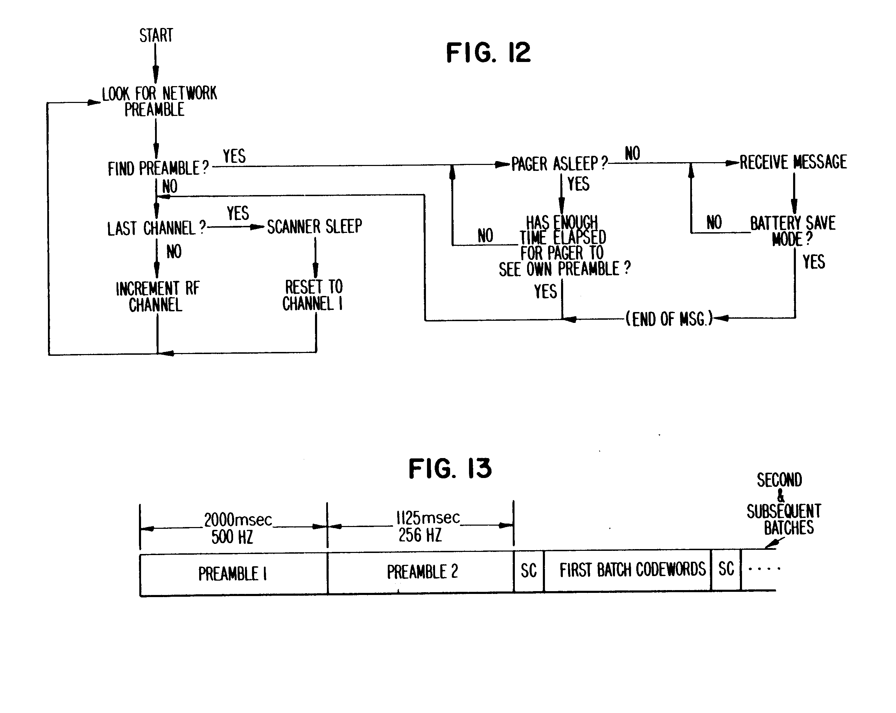

In order to scan all twenty-two frequencies, the conventional fixed frequency receiver is modified as shown in Figure 11. The pager's crystal local oscillator is electrically disconnected and replaced with frequency agile local oscillator 950 and associated logic circuitry 951. The local oscillator frequency is

EP 0 231 259 B1

chosen so that the difference frequency between the local oscillator and RF is 21.4 MHz when the RF/LO frequency numbers are correlated. Logic circuitry 951 uses the flowchart shown in figure 12 to control the LO frequency based on the pager's status (i.e., awake, sleep, preamble detect, etc.).

A transmission consists of two preambles followed by a batch of complete codewords, each batch beginning with a synchronization codeword (SC) (see Figure 13). The first preamble allows for frequency synchronization by the receiving pagers. This preamble is a sequence of logic reversals, 101010... repeating for a period of at least 1200 msec. The preamble frequency is, for example, 500 Hz.

The second preamble is transmitted for pager bit synchronization which also allows for word synchronization. This preamble is a pattern of logic reversals, 101010... repeated for a duration of 1125 msec. One example of a preamble frequency is 256 Hz but other frequencies may be used as well.

TABLE 1

| Channel No. | RF Freq. (MHz) | LO Freq. (MHz) | IF Freq. (MHz) |
|---|---|---|---|
| 1 | 152.03 | 130.63 | 21.4 |
| 2 | 152.06 | 130.66 | 21.4 |
| 3 | 152.09 | 130.69 | 21.4 |
| 4 | 152.12 | 130.72 | 21.4 |
| 5 | 152.15 | 130.75 | 21.4 |
| 6 | 152.18 | 130.78 | 21.4 |
| 7 | 152.21 | 130.81 | 21.4 |
| 8 | 152.24 | 130.84 | 21.4 |
| 9 | 158.70 | 137.30 | 21.4 |

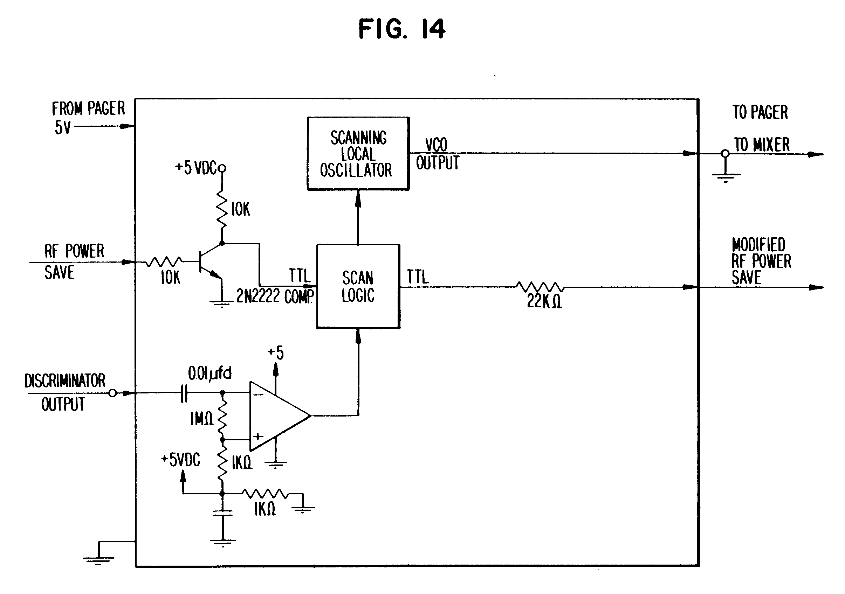

As shown in Figure 14, there are six points of interface between the module of the present invention and the paging receiver. The scanning receiver module is required to perform the following functions:

1. Receive the RF power save from the pager and determine if the pager is in the batter save mode or receiving messages.

2. Receive the pager discriminator data and determine if a valid preamble-1 has occurred.

3. Provide the necessary control signals to the scanning local oscillator section to set the frequency.

The following tables 2-11 more detaily describe the processing of a page through the paging system of the present invention under various conditions.

15

## TABLE 2

### NUMERIC CALL — AUTOMATIC DTMF — LINE — LOCAL

#### RCC SITE PROCESSOR

| | |
|---|---|
| LSU | WAIT STATE polls all idle lines for ring voltage detection periodically sends 'tick' to SSU |
| User | Dials local line and connects to one of the 'LINE n' inputs |
| LSU | Detects ringing on line |
| | Siezes line |
| | Gives Dial Tone |
| User | Dials first digit of pager account number |
| LSU | Removes Dial Tone |
| User | Dials next five digits of pager account number |
| LSU | Gives BEEP |
| LSU | Gives Dial Tone |
| User | Dials display data |
| User | Makes mistake - presses '*' |
| LSU | Gives BEEP |
| LSU | Gives Dial Tone |
| User | Dials display data |

| User | Is through dialing display data - press '#' |
|------|---------------------------------------------|
| LSU | Gives BEEP - BEEP - BEEP |
| LSU | Disconnects |
| LSU | Formats Page Record |
| | Intalls Pager Number |
| | Installs Data Code |
| | Looks up Destination Code, installs |
| | Calculates data blocks required |
| | Obtains source ID number |
| | Installs data |
| LSU | Determines that page destination is one of the local TSU's |
| LSU | Requests and obtains packet ID number |
| LSU | Stores PAGREC in CURRENT PAGE BUFFER |
| LSU | Sends Page Record Holding message to TSU |
| TSU | WAIT STAGE periodically sents 'tick' to Status Service Unit |
| TSU | Receives Page Record Ready message |
| TSU | Loads Page Record into buffer |
| TSU | Formats Page Record into POCSAG format and installs in POCSAG buffer |
| TSU | Checks Holding Time |
| | If not started, starts Holding Time |
| TSU | Awaits Holding Time Time-out or next Page Record Ready Message |
| TSU | Sends Transmitter Time Request to RCC transmitter controller |
| RCC | Transmitter controller sends 'WAIT' or 'GO' |
| | If TSU recieves WAIT |
| | TSU starts 'Max Wait Timer' |
| | If Max Wait Timer times out |
| | TSU sends error message to RSU |
| | RSU receives error message |
| | RSU connects to Monitor Facility |
| | RSU sends 'RCC Transmitter Controller Out-Of-Service Message' |

17

| TSU | Receives 'GO' |
|---|---|
| TSU | Sends 'Transmitter On Command Sequence' |
| TSU | Starts 'Max Wait Timer' |
| | If TSU receives 'Transmitter Fault' from RCC Transmitter Controller |
| | Or if Max Wait Timer times out |
| |     TSU sends 'Transmitter Fault' message to RSU queue |
| RCC | Transmitter Controller sends 'Transmitter On' acknowledgement |
| TSU | Sends POCSAG buffer to RCC Transmitter |
| TSU | Pauses |
| TSU | Sends 'Transmitter Release' message to RCC Transmitter Controller |
| TSU | Starts Max Wait Timer |
| TSU | Starts Repeat Control Burst timer |
| | If Repeat Control Burst Timer times out |
| |     TSU sends 'Transmitter Release' message again |
| | If Max Wait Timer times out |
| |     TSU sends 'Transmitter Controller Fault 2' message to RSU Queue |
| TSU | Sends Page Complete message to ASU |
| TSU | Returns to WAIT stage |
| | — END OF SEQUENCE — |

## TABLE 3

### NUMERIC CALL — AUTOMATIC DTMF — LINE — NATIONWIDE

#### RCC SITE PROCESSOR

| User | Dials local line and connects to one of the 'Line n' inputs |
|---|---|
| LSU | Detects ringing on line |
| |     Siezes line |
| |     Gives dial tone |
| User | Dials first digit of pager account number |
| LSU | Removes Dial Tone |

| User | Dials next five digits of pager account number |
| LSU | Gives BEEP |
| LSU | Gives Dial Tone |
| User | Dials display data |
| User | Makes mistake - presses '*' |
| LSU | Gives BEEP |
| LSU | Gives Dial Tone |
| User | Dials display data |
| User | Is through dialing display data - press '#' |
| LSU | Gives BEEP - BEEP - BEEP |
| LSU | Disconnects |
| LSU | Formats Page Record |
| | Intalls Pager Number |
| | Installs Data Code |
| | Looks up Destination Code, installs |
| | Calculates data blocks required |
| | Obtains source ID number |
| | Installs data |
| LSU | Determines that page requires National routing |
| LSU | Requests and obtains packet ID number |
| LSU | Stores PAGREC in CURRENT PAGE BUFFER |
| LSU | Sends Page Record Holding message to TSU |
| RSU | Receives Page Record Holding message |
| | If no Page Records holding |
| | RSU set page holding time to await additional blocks |
| | If Page Record Holding Time not timed-out, wait |
| | RSU connects modem to Central RSU Traffic Route Processor |
| | If unable to make connection |
| | Repeat connection attempt |
| | If five attempts |
| | Connect to Monitor Facility and report error |

RSU    Sends all current Holding Records

RSU    Awaits handshake for Repeat Request(s)

RSU    Resets, awaits next Page Record

## TRAFFIC ROUTE PROCESSOR

RSU    (From RCC Site) receives Page Records from RCC site

RSU    Checks Source Record ID Number

If not sequential

    RSU sends 'Repeat nnnn Request' to RCC Site Processor

    RSU receives repeated Records

RSU    Checks Destination Code Address

If Destination inaccurate, generates 'New Destination Code' Record for transmission to RCC Site Processor

RSU    Assigns Destination Packet ID number to each Page Record

RSU    Sends Page Record Ready message to Uplink RSU

## UPLINK PROCESSOR

RSU    (To Uplink) receives Page Records Ready message

RSU    Loads Page Records into Page Record Block Queue

RSU    Sends Page Records Ready message to next USU

USU    Receives Page Records Ready message from RSU

USU    Loads Page Records

USU    Awaits Transmission Time loop

USU    Output Page Records in Block format

## SATELLITE SYSTEM SENDS TO DOWNLINK

## DESTINATION RCC SITE PROCESSOR

DSU    Detects record block with correct Destination ID

DSU    Signals next DSU to prepare for input

DSU    Finishes input of Page Record

DSU    Signals 'GO' to next DSU

DSU    Checks and corrects received Page Record

DSU    Requests and obtains a Packet ID from the local SSU

DSU    Loads Page Record to TSU queue

DSU    Sends Page Record Ready to TSU

| DSU | Awaits next 'Prepare to Receive Data' from other DSU(s) |
| --- | --- |
| TSU | WAIT STATE periodically sends 'tick' to Status Service Unit |
| TSU | Receives Page Record Ready message |
| TSU | Loads Page Record into buffer |
| TSU | Formats Page Record into POCSAG format and installs in POCSAG buffer |
| TSU | Checks Holding Time |
| | If not started, starts Holding Time |
| TSU | Awaits Holding Time Time-out or next Page Record Ready message |
| TSU | Sends Transmitter Time Request to RCC transmitter controller |
| RCC | Transmitter controller sends 'WAIT' or 'GO' |
| | If TSU receives WAIT |
| |    TSU starts 'Max Wait Timer' |
| | If Max Wait timer times out |
| |    TSU sends error message to RSU |
| |       RSU receives error message |
| |       RSU connects to Monitor Facility |
| |       RSU sends 'RCC Transmitter Controller Out-of-Service Message' |
| TSU | Receives 'GO' |
| TSU | Sends 'Transmitter On Command Sequence' |
| TSU | Starts 'Max Wait Timer' |
| | If TSU receives 'Transmitter Fault' from RCC Transmitter Control |
| | Or if Max Wait Timer times out |
| |    TSU sends 'Transmitter Fault' message to RSU queue |
| RCC | Transmitter Controller sends 'Transmitter On' acknowledgement |
| TSU | Sends POCSAG buffer to RCC Transmitter |
| TSU | Pauses |
| TSU | Sends 'Transmitter Release' message top RCC Transmitter Controller |

| TSU | Starts Max Wait Timer |
| TSU | Starts Repeat Control Burst timer |
| | If Repeat Cotnrol Burst Timer times out |
| |     TSU sends 'Transmitter Release' message again |
| | If Max Wait Timer times out |
| |     TSU sends 'Transmitter Controller Fault 2' message to RSU Queue |
| TSU | Sends Page Complete message to ASU |
| TSU | Returns to WAIT stage |

        — END OF SEQUENCE —

## TABLE 4

### ALPHANUMERIC INPUT — OPERATOR — LOCAL

| OSU | Initialization |

If modem connection required

    If DIAL NUMBER contains data

        OSU prompts modem for connection

        If five trys with no modem response

            OSU sends 'Modem Fault Detect' to SSU

    Modem Responds

    Sends Dial Data to Modem

    Modem dials number

    Modem sends 'Waiting for Carrier' message to OSU

    If modem does not detect carrier

        Modem sends 'No Data Carrier message to OSU

        OSU retrys

        Every fifth try OSU sends 'Line Fault Detect' to SSU

    Modem sends 'Data Carrier Detect'

| OSU | Sends 'Console Type Request' to remote terminal |

If console does not respond to type select

    OSU selects 'dumb console' default parameters

If console responds with type

|       | OSU selects appropriate control code commands based on received console type |
|-------|------------------------------------------------------------------------------|
| OSU   | Displays Operator Menu |
| OSU   | Enters WAIT STATE |
| OSU   | WAIT STATE periodically sends 'tick' to SSU |

— End OSU initialization

Operator selects desired function (PLACE A PAGE)

OSU   Prompts for Pager Number

If Operator press CR without data

    OSU re-displays menu

Operator enter pager number, using backspace and delete for edits

Operator presses CR

OSU   Looks up page number, sets control block

If pager number is not valid

    OSU sends 'Invalid Pager Number Error' message to Operator

    OSU re-prompts for Pager Number

OSU   Prompts for Display Data

If Operator presses CR without data

    Tone Only Page, proceed to OSU formats Page Record

Operator types in Display Data, using backspace and delete for edits

Operator presses CR

OSU   Formats Page Record

    Installs Pager Number

    Installs Data Code

    Looks up Destination Code, Installs

    Calculates data blocks required

    Obtains source ID number

    Installs data

OSU   Determines that the page is to be placed locally

| OSU | Requests and obtians Packet ID number |
|-----|---------------------------------------|
| OSU | Stores PAGREC in CURRENT PAGE BUFFER |
| OSU | Sends Page Record Holding message to TSU |
| TSU | WAIT STATE periodically sends 'tick' to Status Service Unit |
| TSU | Receives Page Record Ready message |
| TSU | Loads Page Record into buffer |
| TSU | Formats Page Record into POCSAG format and installs in POCSAG buffer |
| TSU | Checks Holding Time |
|     | If not started, starts Holding Time |
| TSU | Awaits Holding Time time-out or next Page Record Ready message |
| TSU | Sends Transmitter Time Request to RCC Transmitter Controller |
| RCC | Transmitter Controller sends 'WAIT' or 'GO' |

If TSU receives WAIT

    TSU starts 'Max Wait Timer'

If Max Wait Timer times out

    TSU sends error message to RSU

        RSU receives error message

        RSU connects to Monitor Facility

        RSU sends 'RCC Transmitter Controller Out-of-Service Message'

| TSU | Receives 'GO' |
|-----|---------------|
| TSU | Sends 'Transmitter On Command Sequence' |
| TSU | Starts 'Max Wait Timer' |

If TSU receives 'Transmitter Fault' from RCC Transmitter Controller

Or if Max Wait Timer times out

    TSU sends 'Transmitter Fault' message to RSU queue

| RCC | Transmitter Controller sends 'Transmitter On' acknowledged |
|-----|-----------------------------------------------------------|
| TSU | Sends POCSAG buffer to RCC Transmitter |

TSU      Pauses

TSU      Sends 'Transmitter Release' message to RCC Transmitter Controller

TSU      Starts Max Wait Timer

TSU      Starts Repeat Control Burst timer

     If Repeat Control Burst Timer times out

         TSU sends 'Transmitter Release' message again

     If Max Wait Timer Times out

         TSU sends 'Transmitter Controller Fault 2" message to RSU Queue

TSU      Sends Page Complete message to ASU

TSU      Returns to WAIT stage

     — END OF SEQUENCE —

TABLE 5

ALPHANUMERIC INPUT — OPERATOR — NATIONWIDE

OSU      Initialization

     If modem connection required

         If DIAL NUMBER contains data

             OSU prompts modum for connection

             If five trys with no modem response

                 OSU sends 'Modem Fault Detect' to SSU

         Modem response

         OSU sends Dial Data to Modem

         Modem dials number

         Modem sends 'Waiting for Carrier' message to OSU

         If modem does not detect carrier

             Modem sends 'No Data Carrier' message to OSU

             OSU retrys

             Every fifty try OSU sends 'Line Fault Detect' to SSU

         Modem sends 'Data Carrier Detect'

OSU      sends 'Console Type Request' to remote terminal

If console does not respond to type select

    OSU selects 'dumb console' default parameters

If console responds with type

    OSU selects appropriate control code commands based on received console type

OSU    Displays Operator Menu

OSU    Enters WAIT STATE

OSU    WAIT STATE periodically sends 'tick' to SSU

    — End OSU initialization

Operator selects desired function (PLACE A PAGE)

OSU    Prompts for Pager Number

If Operator press CR without data

    OSU re-displays menu

Operator enter pager number, using backspace and delete for edits

Operator presses CR

OSU    Looks-up page number, gets control block

If pager number is not valid

    OSU sends 'Invalid Pager Number Error' message to Operator

    OSU re-prompts for Pager Number

OSU    Prompts for Display Data

If Operator presses CR without data

    Tone Only Page, proceed to OSU formats Page Record

Operator types in Display Data, using backspace and delete for edits

Operator presses CR

OSU    Formats Page Record

    Installs Pager Number

    Installs Data Code

    Looks up Destination Code, Installs

    Calculates data blocks required

Obtains source ID number

Installs data

OSU    Determines that the call is to be routed National system

OSU    Requests and obtains Packet ID number

OSU    Stores PAGREC in CURRENT PAGE BUFFER

OSU    Sends Page Record Holding message to RSU

RSU    Receives Page Record Holding message

If no Page Records Holding

RSU set page holding time to await additional blocks

If Page Record Holding Time Not timeed out, wait

RSU connects modem to Central RSU Traffic Route Processor

If unable to make connection

Repeat connection attempt

If five attempts

Connect to Monitor Facility and report Error

RSU    Sends all current Holding Records

RSU    Awaits handshake for Repeat Request(s)

RSU    Resets, awaits next Page Record

TRAFFIC ROUT PROCESSOR

RSU    (From RCC Site) receives Page Records from RCC SITE

RSU    Checks Source Record ID Number

If not sequential

RSU sends 'Repeat nnnn Request' to RCC Site Processor

RSU receives repeated Records

RSU    Checks Destination Code Address

If Destination inaccurate, generates 'New Destination Code' Record for transmission to RCC Site Processor

RSU    Assigns Destiniation Packet ID Number to each Page Record

RSU    Sends Page Record Ready message to Uplink RSU

27

UPLINK PROCESSOR

| | |
|---|---|
| RSU | (To Uplink) receives Page Records Ready message |
| RSU | Loads Page Records into Page Record Block Queue |
| RSU | Sends Page Records Ready message to next USU |
| USU | Receives Page Records Ready message from RSU |
| USU | Loads Page Records into ram buffer |
| USU | Awaits Transmission Time loop |
| USU | Output Page Records in Block format |

STAELLITE SYSTEM SENDS TO DOWNLINK


DESTINATION RCC SITE PROCESSOR

| | |
|---|---|
| DSU | Detects record block with correct Destination ID |
| DSU | Signals next DSU to prepare for input |
| DSU. | Finishes input of Page Record |
| DSU | Signals 'GO' to next DSU |
| DSU | Checks and corrects received Page Record |
| DSU | Requests and obtains a Packet ID from the local SSU |
| DSU | Loads Page Record to TSU queue |
| DSU | Sends Page Record Ready to TSU |
| DSU | Awaits next 'Prepare to Receive Data' from other DSU(s) |
| TSU | WAIT STATE periodically sends 'tick' to Status Service Unit |
| TSU | Receive Page Record Ready message |
| TSU | Loads Page Record into buffer |
| TSU | Formats Page Record into POCSAG format and installs in POCSAG buffer |
| TSU | Checks Holding Time<br>If not started, starts Holding Time |
| TSU | Awaits Holding Time time out or next Page Record Ready Message |
| TSU | Sends Transmitter Time Request to RCC Transmitter Controller |
| RCC | Transmitter Controller sends 'WAIT' or 'GO' |

EP 0 231 259 B1

If TSU receives WAIT

   TSU starts 'Max Wait Timer'

If Max Wait Timer times out

   TSU sends error message to RSU

      RSU receives error message

      RSU connects to Monitor Facility

      RSU sends 'RCC Transmitter Controller Out-of-Service Message'

TSU    Receives 'GO'

TSU    Sends 'Transmitter On Command Sequence'

TSU    Starts 'Max Wait Timer'

If TSU recieves 'Transmitter Fault' from RCC Transmitter Controller

Or if Max Wait Timer times out

   TSU sends 'Transmitter Fault' message to RSU queue

RCC    Transmitter Controller sends 'Transmitter On' acknowledgement

TSU    Sends POCSAG buffer to RCC Transmitter

TSU    Pauses

TSU    Sends 'Transmitter Release' message to RCC Transmitter Controller

TSU    Starts Max Wait Timer

TSU    Starts Repeat Control Burst timer

If Repeat Control Burst Timer times out

   TSU sends 'Transmitter Release' message again

If Max Wait Timer times out

   TSU sends 'Transmitter Controller Fault 2' message to RSU Queue

TSU    Send Page Complete message to ASU

TSU    Returns to WAIT state

    — END OF SEQUENCE —

29

## TABLE 6

### ALPHANUMERIC INPUT — MANUAL — CUSTOMER SERVICE UNIT — LOCAL

(Customer Equipped with Console and Modem — No Processor)

CSU      WAIT STATE periodically sends 'tick' to SSU

Calling party dials line number

Modem Detects ring signal

    Modem answers

Calling party presses or sends CR

CSU      Requests logon ID (which contains type specification)

If calling party sends invalid logon ID

    CSU sends 'Invalid Logon ID'

    CSU disconnects modem

    CSU returns to WAIT STATE

Calling party responds with valid logon ID

    CSU selects appropriate console command codes based on type specification in Logon ID

CSU      Sends appropriate Customer Service Menu

CSU      Resets 'Dead Console' timer

If 'Dead Console' Timer times out

    CSU sends 'No Activity Time out Error'

    CSU disconnects modem

Calling party selects desired function (PLACE A PAGE)

CSU      Prompts for Pager Number

If Customer press CR without data

    CSU re-displays menu

Customer enter pager number using backspace and delete for edits

Customer presses CR

CSU      Looks up page number, gets control block

If pager number is not valid

    CSU sends 'Invalid Pager Number Error' message to Customer

CSU re-prompts for Pager Number

CSU      Prompts for Display Data

If Customer presses CR without data

Tone Only Page, proceed to CSU formats Page Record

Customer types in Display Data, using backspace and delete for edits

Customer presses CR

CSU      Formats Page Record

Installs Pager Number

Installs Date Code

Looks up Destination Code, Intalls

Calculates data blocks required

Obtians source ID number

Installs data

CSU      Determines that page should be processed locally

CSU      Requests and obtians Packet ID Number

CSU      Stores PAGREC in CURRENT PAGE BUFFER

CSU      Sends Page Record holding message to TSU

CSU      Disconnects modem

TSU      WAIT STATE periodically sends 'tick' to Status Service Unit

TSU      Receives Page Record Ready message

TSU      Loads Page Record into buffer

TSU      Formats Page Record into POCSAG format and installs in POCSAG buffer

TSU      checks Holding Time

If not started, starts Holding Time

TSU      Awaits Holding Time time out or Next Page Record Ready message

TSU      Sends Transmitter Time Request to RCC Transmitter Controller

RCC      Transmitter Controller sends 'WAIT' or 'GO'

If TSU receives WAIT

```
                    TSU  starts  'Max  Wait  Timer'
               If  Max  Wait  Timer  times  out
                    TSU  sends  error  message  to  RSU
                         RSU  receives  error  message
                         RSU  connects  to  Monitor  Facility
                         RSU  sends  'RCC  Transmitter  Controller
                         Out-of-Service  Message'
     TSU      Receives  'GO'
     TSU      Sends  'Transmitter  On  Command  Sequence'
     TSU      Starts  'Max  Wait  Timer'
               If  TSU  receives  'Transmitter  Fault'  from  RCC  Transmitter
               Controller
               Or  if  Max  Wait  Timer  times  out
                    TSU  sends  'Transmitter  Fault'  message  to  RSU  Queue
     RCC      Transmitter  Controller  sends  'Transmitter  On'  acknowledgement
     TSU      Sends  POCSAG  buffer  to  RCC  Transmitter
     TSU      Pauses
     TSU      Sends  'Transmitter  Release'  message  to  RCC  Transmitter  Con-
               troller
     TSU      Starts  Max  Wait  Timer
     TSU      Starts  Repeat  Control  Burst  timer
               If  Repeat  Control  Burst  Timer  times  out
                    TSU  sends  'Trandmitter  Release'  message  again
               If  Max  Wait  Timer  times  out
                    TSU  sends  'Transmitter  Control  Fault  2'  message  to  RSU
                    Queue
     TSU      Sends  Page  Complete  message  to  ASU
     TSU      Returns  to  WAIT  STATE
                    —  END  OF  SEQUENCE  —
```

## TABLE 7

**ALPHANUMERIC INPUT — MANUAL — CUSTOMER SERVICE UNIT — NATIONWIDE**

CSU     WAIT STATE periodically sends 'tick' to SSU

Calling party dials line number

Modem Detects ring signal

Modem answers

Calling party presses or sends CR

CSU     Requests logon ID (which contains type specification)

If calling party sends invalid logon ID

CSU sends 'Invalid Logon ID'

CSU disconnects modem

CSU returns to WAIT STATE

Calling party responds with valid logon ID

CSU selects appropriate console command codes based on type specification in Logon ID

CSU     Sends appropriate Customer Service Menu

CSU     Resets 'Dead Console' timer

If 'Dead Console' Timer times out

CSU sends 'No Activity Time out Error'

CSU disconnects modem

Calling party selects desired function (PLACE A PAGE)

CSU     Prompts for Pager Number

If Customer press CR without data

CSU re-displays menu

Customer enter pager number using backspace and delete for edits

Customer presses CR

CSU     Looks up page number, gets control block

If pager number is not valid

CSU sends 'Invalid Pager Number Error' message to Customer

CSU re-prompts for Pager Number

33

CSU      Prompts for Display Data

If Customer presses CR without data

Tone Only Page, proceed to CSU formats Page Record

Customer types in Display Data, using backspace and delete for edits

Customer presses CR

CSU      Formats Page Record

Installs Pager Number

Installs Date Code

Looks up Destination Code, Intalls

Calculates data blocks required

Obtians source ID number

Installs data

CSU      Determines that page should be placed on the National System

CSU      Requests and obtains Packet ID Number

CSU      Stores PAGREC in CURRENT PAGE BUFFER

CSU      Sends Page Record holding message to TSU

CSU      Disconnects modem

RSU      Recieves Page Record Holding message

If no Page Records Holding

RSU set page holding time to await additional blocks

If Page Record Holding Time not timed out, wait

RSU      Connects modem to Central RSU Traffic Rout Processor

If unable to make connection

Repeat connection attempt

If five attempts

Connect to Monitor Facility and report Error

RSU      Sends all current Holding Records

RSU      Awaits handshake for Repeat Request(s)

RSU      Resets, await next Page Record

## TRAFFIC ROUTE PROCESSOR

RSU    (From RCC Site) receives Page Records from RCC SITE

RSU    Checks Source Record ID Number

        If not sequential

            RSU sends 'Repeat nnnn Request' to RCC Site Porcessor

            RSU receives repeated records

RSU    Checks Destination Code Address

        If Destination inaccurate, generates 'New Destination Code' Record for transmission to RCC Site Processor

RSU    Assigns Destination Packet ID Number to each Page Record

RSU    Sends Page Record Ready message to Uplink RSU

## UPLINK PROCESSOR

RSU    (To Uplink) receives Page Records Ready message

RSU    Loads Page Records into Page Record Block Queue

RSU    Sends Page Records Ready message to next USU

USU    Receives Page Records Ready message from RSU

USU    Loads Page Records into ram buffer

USU    Awaits Transmission Time loop

USU    Output Page Records in Block format

## SATELLITE SYSTEM SENDS TO DOWNLINK

## DESTINATION RCC SITE PROCESSOR

DSU    Detects record block with correct Destination ID

DSU    Signals next DSU to prepare for input

DSU    Finishes input of Page Record

DSU    Signals 'GO' to next DSU

DSU    Checks and corrects received Page Record

DSU    Requests and obtains a Packet ID from the local SSU

DSU    Loads Page Record to TSU queue

DSU    Sends Page Record Ready to TSU

DSU    Awaits next 'Prepare to Receive Data' from other DSU(s)

TSU    WAIT STATE periodically sends 'tick' to Status Service Unit

TSU    Receives Page Record Ready message

TSU    Loads Page Record into buffer

TSU    Formats Page Record into POCSAG format and installs in POCSAG buffer

TSU    Checks Holding Time

If not started, starts Holding Time

TSU    Awaits Holding Time time out or Next Page Record Ready message

TSU    Sends Transmitter Time Request to RCC Transmitter Controller

RCC    Transmitter Controller sends 'WAIT' or 'GO'

If TSU receives WAIT

    TSU starts 'Max Wait Timer'

If Max Wait Timer times out

    TSU sends error message to RSU

        RSU receives error message

        RSU connects to Monitor Facility

        RSU sends 'RCC Transmitter Controller Out-of-Service Message'

TSU    Receives 'GO'

TSU    Sends 'Transmitter On Command Sequence'

TSU    Starts 'Max Wait Timer'

If TSU receives 'Transmitter Fault' from RCC Transmitter Controller

Or if Max Wait Timer times out

    TSU sends 'Transmitter Fault' message to RSU Queue

RCC    Transmitter Controller sends 'Transmitter On' acknowledgement

TSU    Sends POCSAG buffer to RCC Transmitter

TSU    Pauses

TSU    Sends 'Transmitter Release' message to RCC Transmitter Controller

TSU    Starts Max Wait Timer

TSU    Starts Repeat Control Burst timer

If Repeat Control Burst Timer times out

    TSU sends 'Transmitter Release' message again

If Max Wait Timer times out

    TSU sends 'Transmitter Control Fault 2' message to RSU

    Queue

TSU    Sends Page Complete message to ASU

TSU    Returns to WAIT STATE

    — END OF SEQUENCE —

## TABLE 8

## ALPHANUMERIC INPUT — ENCODER — CUSTOMER SERVICE UNIT — LOCAL

CSU    WAIT STATE periodically sends 'tick' to SSU

    Calling device dials line number

    Modem detects ring signal

        Modem answers

    Calling device presses or sends CR

CSU    Requests logon ID (which contains type specification)

    If calling device sends invalid logon ID

        CSU sends 'Invalid Logon ID'

        CSU disconnects modem

        CSU returns to WAIT STATE

    Calling device responds with valid logon ID

        CSU selects no echo, no prompt

        Calling device sends Pager Number, CR

        CSU looks up Pager Number

        If Pager Number not valid

            CSU sends "Error Response Message'

            CSU disconnects

            CSU returns to WAIT STATE

        Calling device inputs Display Data

        Calling device inputs CR

CSU    Formats Page Record

        Installs Pager Number

Installs Date Code

Looks up Destination Code, Intalls

Calculates data blocks required

Obtians source ID number

Installs data

| | |
|---|---|
| CSU | Determines that page should be processed locally |
| CSU | Requests and obtains Packet ID Number |
| CSU | Stores PAGREC in CURRENT PAGE BUFFER |
| CSU | Sends Page Record holding message to TSU |
| CSU | Disconnects modem |
| TSU | WAIT STATE periodically sends 'tick' to Status Service Unit |
| TSU | Receives Page Record Ready message |
| TSU | Loads Page Record into buffer |
| TSU | Formats Page Record into POCSAG format and installs in POCSAG buffer |
| TSU | checks Holding Time |
| | If not started, starts Holding Time |
| TSU | Awaits Holding Time time out or Next Page Record Ready message |
| TSU | Sends Transmitter Time Request to RCC Transmitter Controller |
| RCC | Transmitter Controller sends 'WAIT' or 'GO' |
| | If TSU receives WAIT |
| | TSU starts 'Max Wait Timer' |
| | If Max Wait Timer times out |
| | TSU sends error message to RSU |
| | RSU receives error message |
| | RSU connects to Monitor Facility |
| | RSU sends 'RCC Transmitter Controller Out–of–Service Message' |
| TSU | Receives 'GO' |
| TSU | Sends 'Transmitter On Command Sequence' |

| TSU | Starts 'Max Wait Timer' |
| | If TSU receives 'Transmitter Fault' from RCC Transmitter Controller |
| | Or if Max Wait Timer times out |
| | TSU sends 'Transmitter Fault' message to RSU Queue |
| RCC | Transmitter Controller sends 'Transmitter On' acknowledgement |
| TSU | Sends POCSAG buffer to RCC Transmitter |
| TSU | Pauses |
| TSU | Sends 'Transmitter Release' message to RCC Transmitter Controller |
| TSU | Starts Max Wait Timer |
| TSU | Starts Repeat Control Burst timer |
| | If Repeat Control Burst Timer times out |
| | TSU sends 'Trandmitter Release' message again |
| | If Max Wait Timer times out |
| | TSU sends 'Transmitter Control Fault 2' message to RSU Queue |
| TSU | Sends Page Complete message to ASU |
| TSU | Returns to WAIT STATE |
| | — END OF SEQUENCE — |

TABLE 9

ALPHANUMERIC INPUT — ENCODER — CUSTOMER SERVICE UNIT — NATIONWIDE

| CSU | WAIT STATE periodically sends 'tick' to SSU |
| | Calling device dials line number |
| | Modem Detects ring signal |
| | Modem answers |
| | Calling device presses or sends CR |
| CSU | Requests logon ID (which contains type specification) |
| | If calling device sends invalid logon ID |
| | CSU sends 'Invalid Logon ID' |
| | CSU disconnects modem |
| | CSU returns to WAIT STATE |

.If calling device responds valid ID and Automatic Encoder

    CSU selects no echo, no prompt

    Calling device sends Pager Number, CR

    CSU looks up Pager Number

    If Pager Number not valid

        CSU sends 'Error Response Message'

        CSU disconnects

        CSU returns to WAIT STATE

    Calling device inputs Display Data

    Calling device inputs CR

CSU     Formats Page Record

    Installs Pager Number

    Installs Date Code

    Looks up Destination Code, Intalls

    Calculates data blocks required

    Obtians source ID number

    Installs data

CSU     Determines that page should be placed on the National System

CSU     Requests and obtAIns Packet ID Number

CSU     Stores PAGREC in CURRENT PAGE BUFFER

CSU     Sends Page Record holding message to TSU

CSU     Disconnects modem

RSU     Recieves Page Record Holding message

    If no Page Records Holding

        RSU set page holding time to await additional blocks

    If Page Record Holding Time not timed out, wait

RSU     Connects modem to Central RSU Traffic Route Processor

    If unable to make connection

        Repeat connection attempt

        If five attempts

           Connect to Monitor Facility and report Error

RSU     Sends all current Holding Records

| | |
|---|---|
| RSU | Awaits handshake for Repeat Request(s) |
| RSU | Resets, await next Page Record |

### TRAFFIC ROUTE PROCESSOR

| | |
|---|---|
| RSU | (From RCC Site) receives Page Records from RCC site |
| RSU | Checks Source Record ID Number |
| | If not sequential |
| |     RSU sends 'Repeat nnnn Request' to RCC Site Porcessor |
| |     RSU receives repeated records |
| RSU | Checks Destination Code Address |
| | If Destination inaccurate, generates 'New Destination Code' Record for transmission to RCC Site Processor |
| RSU | Assigns Destination Packet ID Number to each Page Record |
| RSU | Sends Page Record Ready message to Uplink RSU |

### UPLINK PROCESSOR

| | |
|---|---|
| RSU | (To Uplink) receives Page Records Ready message |
| RSU | Loads Page Records into Page Record Block Queue |
| RSU | Sends Page Records Ready message to next USU |
| USU | Receives Page Records Ready message from RSU |
| USU | Loads Page Records into ram buffer |
| USU | Awaits Transmission Time loop |
| USU | Output Page Records in Block format |

### SATELLITE SYSTEM SENDS TO DOWNLINK

### DESTINATION RCC SITE PROCESSOR

| | |
|---|---|
| DSU | Detects record block with correct Destination ID |
| DSU | Signals next DSU to prepare for input |
| DSU | Finishes input of Page Record |
| DSU | Signals 'GO' to next DSU |
| DSU | Checks and corrects received Page Record |
| DSU | Requests and obtains a Packet ID from the local SSU |
| DSU | Loads Page Record to TSU queue |
| DSU | Sends Page Record Ready to TSU |

| | |
|---|---|
| DSU | Awaits next 'Prepare to Receive Data' from other DSU(s) |
| TSU | WAIT STATE periodically sends 'tick' to Status Service Unit |
| TSU | Receives Page Record Ready message |
| TSU | Loads Page Record into buffer |
| TSU | Formats Page Record into POCSAG format and installs in POCSAG buffer |
| TSU | Checks Holding Time |
| | If not started, starts Holding Time |
| TSU | Awaits Holding Time time out or Next Page Record Ready message |
| TSU | Sends Transmitter Time Request to RCC Transmitter Controller |
| RCC | Transmitter Controller sends 'WAIT' or 'GO' |
| | If TSU receives WAIT |
| |    TSU starts 'Max Wait Timer' |
| | If Max Wait Timer times out |
| |    TSU sends error message to RSU |
| |       RSU receives error message |
| |       RSU connects to Monitor Facility |
| |       RSU sends 'RCC Transmitter Controller Out-of-Service Message' |
| TSU | Receives 'GO' |
| TSU | Sends 'Transmitter On Command Sequence' |
| TSU | Starts 'Max Wait Timer' |
| | If TSU receives 'Transmitter Fault' from RCC Transmitter Controller |
| | Or if Max Wait Timer times out |
| |    TSU sends 'Transmitter Fault' message to RSU Queue |
| RCC | Transmitter Controller sends 'Transmitter On' acknowledgement |
| TSU | Sends POCSAG buffer to RCC Transmitter |
| TSU | Pauses |
| TSU | Sends 'Transmitter Release' message to RCC Transmitter Controller |

| TSU | Starts Max Wait Timer |
|---|---|
| TSU | Starts Repeat Control Burst timer |
| | If Repeat Control Burst Timer times out |
| |     TSU sends 'Transmitter Release' message again |
| | If Max Wait Timer times out |
| |     TSU sends 'Transmitter Control Fault 2' message to RSU Queue |
| TSU | Sends Page Complete message to ASU |
| TSU | Returns to WAIT STATE |
| |     — END OF SEQUENCE — |

TABLE 10

ADDITIONAL OPERATOR FUNCTIONS

| OSU | In Wait State, periodically sends 'tick' to SSU |
|---|---|
| | Operator presses 'D' for Display a Pager Control Block |
| |     OSU prompts for Pager Account Number |
| |     Operator made mistake, pressed 'D' key by mistake |
| |         Operator presses RETURN without pager number |
| |         OSU re-displays Menu |
| |         OSU returns to Wait State |
| |     Operator enters Pager Account Number |
| |     OSU converts account number to binary record number |
| |     OSU otains Pager Control Block from hard disk data file |
| |     OSU displays current Pager Control Block contents |
| OSU | Prompts for 'Change of Menu' command |
| | Operator selects Menu |
| |     OSU re-displays Menu |
| |     OSU returns to Wait State |
| | Operator selects Change |
| OSU | Prompts for new Pager Cap-Code |
| | Operator does not want to change Pager Cap Code |
| |     Operator presses RETURN with no data |
| |     OSU proceeds to 'Owner System' selection |

43

Operator enters new Pager Cap Code

OSU stores Pager Cap Code in Data File (Owner Selection)

OSU Checks Owner System

If Owner System is '000' (new pager on system)

 OSU installs local system ID as Owner System

 OSU installs 'New Pager' page type in PAGREC

If Owner System is not '000' (update existing pager)

 OSU installs 'Update' page type in PAGREC

OSU Prompts for Current Location telephone number of 'L' if local

Operator presses RETURN with no data

 OSU proceeds to 'Current Status' section

Operator presses 'L' key

 OSU installs current system ID as Current Location

Operator enters an Area Code and Exchange of Location City

 OSU calculates record position in Service Area File

 OSU obtains destination system ID

 OSU installs destination system ID in PAGREC (Current Status)

OSC Prompts for current status of pager

Operator presses RETURN with no data

 OSU proceeds to 'PAGREC' section

Operator enters new Status Code

 OSU installs new status code in PAGREC (PAGREC)

OSU Checks PAGREC to see if any changes have been made

If any changes made

 OSU formats Page record

  Installs Pager Number

  Installs Data Code

  Obtains Source ID Number

  Installs data

OSU Requests and obtains Packet ID Number

OSU Stores PAGREC in CURRENT PAGE BUFFER

OSC    Sends Page Record Holding message to RSU

RSU    Receives Page Record Holding Message

If no Page Records holding

    RSU set page holding time to await additional blocks

If Page Record Holding Time not timed out, wait

RSU    Connects modem to Central RSU Traffic Route Processor

If unable to make connection.

    Repeat connection attempt

    If five attempts

        Connect to Monitor Facility and report error

RSU    Sends all current Holding Records

RSU    Awaits handshake for Repeat Request(s)

RSU    Resets, Awaits next Page Record

## TRAFFIC ROUTE PROCESSOR

RSU    (From RCC Site) receives Page Records from RCC SITE

RSU    Checks Source Record ID Number

If not sequential

    RSU sends 'Repeat nnnn Request' to RCC Site Porcessor

    RSU receives repeated records

RSU    Checks Destination Code Address

If Destination inaccurate, generates 'New Destination Code' Record for transmission to RCC Site Processor

RSU    Assigns Destination Packet ID Number to each Page Record

RSU    Sends Page Record Ready message to Uplink RSU

## UPLINK PROCESSOR

RSU    (To Uplink) receives Page Records Ready message

RSU    Loads Page Records into Page Record Block Queue

RSU    Sends Page Records Ready message to next USU

USU    Receives Page Records Ready message from RSU

USU    Loads Page Records into ram buffer

USU    Awaits Transmission Time loop

USU    Output Page Records in Block format

## SATELLITE SYSTEM SENDS TO DOWNLINK

### DESTINATION RCC SITE PROCESSOR

| | |
|---|---|
| DSU | Detects record block with correct Destination ID |
| DSU | Signals next DSU to prepare for input |
| DSU | Finishes input of Page Record |
| DSU | Signals 'GO' to next DSU |
| DSU | Checks and corrects received Page Record |
| DSU | Requests and obtains a Packet ID from the local SSU |
| DSU | Stores PAGREC in CURRENT PAGE BUFFER |
| DSU | Determines that PAGREC is not a Page but an update |
| DSU | Sends Pager Update Record Holding to ASU |

### ACCOUNTING SERVICE UNIT

| | |
|---|---|
| ASU | Receives Pager Update Record Holding from DSU |
| ASU | Looks up Pager Account Number in Pager Control Block File |
| ASU | Installs Pager Cap Code in Pager Control Block |
| ASU | Installs Owner Service in Pager Control Block |
| ASU | Installs Current Location in Pager Control Block |
| ASU | Installs Current Status in Pager Control Block |
| ASU | Writes Pager Control Block to File |
| ASU | Returns to Wait State |

### TABLE 11

### PROCESS LEVEL BACKGROUND FUNCTIONS

System operation requires a number of background functions, and functions which have not been previously discussed. These functions are transparent to the system.

SSU – Status Service Unit – The SSU performs monitoring of all processes in the system and attempts to correct errors if they occur. The process failure detection sequence depends upon each process in the system 'reporting' to the SSU periodically by sending a 'tick'. The timers used to determine when a process has failed are dependent upon an RTC interrupt.

The SSU also maintains a data table which can be interrogated by a local process. The SSU normally runs in the Utility Processor, therefor the STATUS utility program is capable of displaying the SYSTEM status.

SSU      Receives 'tick' from external process

         SSU resets process timer to max value

SSU      Receives timer interrupt

         SSU decrements all timers

         If process timer times out

             SSU requests 'reset' by master of faulty process

             SSU updates status table showing reset

         If environment status timer times out

             SSU interrogates the external Status Monitor Device

             SSU fills in status form

             SSU checks for out-of-range condition

             If condition out-of-range

                 SSU initiates Service Request via Page Record

SSU      Receives Packet ID request

         SSU sends packet ID to requesting process

         SSU increments Packet ID counter

         If Packet ID counter exceeds 4096

             SSU reset Packet ID counter to 0

     END

DSU - Downlink Service Unit - The DSU also looks for page records from the downlink which match the local "Owner System." When one is detected, the record is stored and the ASU is notified.

DSU      Detects Page Record with correct 'Woner System'

DSU      Requests and receives a Packet ID number from the SSU

DSU      Stores the Page Record

DSU      Sends 'Page Record Holding Message' to ASU

     END

ASU - Accounting Service Unit - The ASU is responsible for

posting pages to local pager accounts. The DSU will send a Page Record each time it detects one on the downlink.

The ASU is also the local system whenever a Pager Update is received (see Additional Operator Functions).

ASU    Receives 'Page Record Holding Message' from DSU

ASU    Locates the account record in the local account file

    If the page was local

        ASU increments the Local Page Counter

    If the page was National

        ASU increments the National Page Counter

    END

## Claims

1. A wide area paging system, said system comprising:

   local page processing means (1 to 5) within each of a plurality of geographical areas served by said wide area paging system, said local page processing means including page information receiving means (3, 4) for receiving said page information control means for controlling at least one radio common carrier (1) for broadcasting said page information throughout one of said geographical area; and

   central page processing means (6) connected to each of said local page processing means (1 to 5) for receiving copies of page information from said local page processing means; characterised in that said central page processing means (6) includes distribution means by which said copies are distributed to said local processing means (1 to 5) for broadcast by radio common carrier means (1) in the said one geographical area and in a geographical area other than the said one geographical.

2. The paging system of claim 1 wherein said local page processing means includes:

   input means (2) for receiving page information;

   a plurality of conventional radio common carriers (1), each of said common carriers being adapted to broadcast page information;

   processor means (3) connected to said input means (2) and to each of said common carriers (1), said processor means (3) being adapted to receive page information from said input means (2), wherein said processor means (3) controls said radio commom carriers (1) to broadcast said page information over a selected one of said radio common carriers (1).

3. The paging system of claim 2 wherein each of said radio common carriers (1) broadcasts said page information on a different frequency.

4. The paging system of claim 2 or 3 wherein said processor means (3) includes format means (205) for converting said page information to the appropriate format used by the selected one of said radio common carriers (1).

5. The paging system of any one of claims 2, 3 or 4 wherein said input means (2) is a telephone.

6. The paging system of any one of claims 2, 3, 4 or 5 wherein said processor means (3) includes storage means (202, 204) for storing a plurality of page information records, wherein said processor means (3) controls said radio common carriers (1) to broadcast selected ones of the stored page information records in response to a signal from said input means (2).

7. The paging system of any one of claims 2 to 6 wherein said processor means (3) is a computer system.

**8.** The paging system of any one of claims 2 to 7 wherein said page receiving means (4) including scanning means for scanning the broadcast frequencies of each of said radio common carriers.

**9.** The paging system of any one of claims 1 to 8 wherein said central page processing means includes:
processing means (6) for receiving page information from said local page processing means;
format means for formatting said page information in a predetermined format; and
distribution means (12) for distributing said formatting page information to all geographical areas served by said paging system.

**10.** The paging system of claim 9 wherein said local page processing means includes receiver (5) means for receiving said formatted page information and re-formatting means for re-formatting said information for broadcast in a selected geographical area.

## Patentansprüche

**1.** Weiträumiges Personenrufsystem mit:
- lokalen Rufverarbeitungsmitteln (1 bis 5) innerhalb eines jeden von einer Vielzahl geographischer Gebiete, die durch das weiträumige Personenrufsystem bedient werden, wobei die lokalen Rufverarbeitungsmittel rufinformationsempfangende Mittel (3,4) zum Empfang der Rufinformation und Steuermittel zur Steuerung wenigstens eines Funknetzträgers (1) für die Sendung der Rufinformation überall innerhalb eines der geographischen Gebiet enthalten, und
- zentralen, mit jedem der lokalen Rufverarbeitungsmittel (1 bis 5) verbundenen Rufverarbeitungsmitteln (6) für den Empfang von Kopien der Rufinformation von den lokalen Rufverarbeitungsmitteln, dadurch gekennzeichnet, daß
- die zentralen Rufverarbeitungsmittel (6) Verbreitungsmittel enthalten, mittels derer die Kopien an die lokalen Rufverarbeitungsmittel(1 bis 5) für die Sendung durch die Funknetzträgermittel (1) in dem einen geographischen Gebiet und in einem davon verschiedenen, anderen geographischen Gebiet verbreitet werden.

**2.** Personenrufsystem nach Anspruch 1, in den, die lokalen Rufverarbeitungsmittel folgende Elemente enthalten:
- Eingabemittel (2) zum Empfang von Rufinformation;
- eine Mehrzahl herkömmlicher Funknetzträger (1), von denen jeder zur Sendung von Rufinformation angepaßt ist; und
- mit den Eingabemitteln (2) und jedem der Funknetzträger (1) verbundene Prozessormittel (3), wobei die Prozessormittel (3) daran angepaßt sind, Rufinformation von den Eingabemitteln (2) zu empfangen und wobei die Prozessormittel (3) die Funknetzträger (1) steuern, um die Rufinformation über einen ausgewählten dieser Funknetzträger (1) zu senden.

**3.** Personenrufsystem nach Anspruch 2, in dem jeder Funknetzträger (1) die Rufinformation auf einer anderen Frequenz sendet.

**4.** Personenrufsystem nach Anspruch 2 oder 3, in dem die Prozessormittel (3) Formatiermittel (205) für die Umwandlung der Rufinformation in das geeignete, von dem einen ausgewählten der Funknetzträger (1) verwendeten Format enthalten.

**5.** Personenrufsystem nach einem der Ansprüche 2 bis 4, in dem die Eingabemittel (2) aus einem Telefon bestehen.

**6.** Personenrufsystem nach einem der Ansprüche 2 bis 5, in dem die Prozessormittel (3) Speichermittel (202, 204) für die Speicherung einer Vielzahl von Rufinformationsdatensätzen enthalten und die Prozessormittel (3) die Funknetzträger (1) zum Senden ausgewählter Datensätze der gespeicherten Rufinformationsdatensätze in Erwiderung eines Signals von den Eingabemitteln (2) steuern.

**7.** Personenrufsystem nach einem der Ansprüche 2 bis 6, in dem die Prozessormittel (3) aus einem Rechnersystem bestehen.

**8.** Personenrufsystem nach einem der Ansprüche 2 bis 7, in dem die rufempfangenden Mittel (4)

EP 0 231 259 B1

Abtastmittel zum Abtasten der Sendefrequenzen eines jeden der Funknetzträger enthalten.

**9.** Personenrufsystem nach einem der Ansprüche 1 bis 8, in dem die zentralen Rufverarbeitungsmittel folgende Elemente enthalten:
- verarbeitende Mittel (6) zum Empfang von Rufinformation von den lokalen Rufverarbeitungsmitteln;
- Formatiermittel zum Formatieren der Rufinformation in ein vorgegebenes Format; und
- Verbreitungsmittel (12) für die Verbreitung der formatierten Rufinformation in alle von dem Personenrufsystem bedienten geographischen Gebiete.

**10.** Personenrufsystem nach Anspruch 9, in dem die lokalen Rufverarbeitungsmittel Empfängermittel (5) zum Empfang der formatierten Rufinformation und Umformatiermittel für die Umformatierung der Information zum Senden in einem ausgewählten geographischen Gebiet enthalten.

**Revendications**

**1.** Système de recherche de personnes sur un vaste territoire, ledit système comprenant :
des moyens locaux (1 à 5) de traitement de recherche de personnes à l'intérieur de chacune d'une pluralité de zones géographiques désservies par ledit système de recherche de personnes sur un vaste territoire, lesdits moyens locaux de traitement de recherche de personnes comprenant un moyen récepteur d'informations de recherche de personnes (3, 4) pour recevoir ladite information de recherche de personnes, un moyen de commande pour commander au moins une porteuse radio commune (1) pour émettre ladite information de recherche de personnes sur l'une desdites zones géographiques ; et
un moyen central (6) de traitement de recherche de personnes connecté à chacun desdits moyens locaux (1 à 5) de recherche de personnes pour recevoir des copies des informations de recherche de personnes issues desdits moyens locaux de traitement de recherche ; caractérisé en ce que ledit moyen central (6) de traitement de recherche de personnes comprend un moyen de distribution par lequel lesdites copies sont distribuées auxdits moyens de traitement locaux (1 à 5) pour émission par un moyen de porteuse radio commune (1) dans ladite une zone géographique et dans une autre zone géographique que ladite une zone géographique.

**2.** Système de recherche de personnes selon la revendication 1, dans lequel lesdits moyens locaux de traitement de recherche de personnes comprennent :
un moyen d'entrée (2) pour recevoir l'information de recherche de personnes ;
une pluralité de porteuses radio communes classiques (1), chacune desdites porteuses communes étant conçue pour émettre l'information de recherche de personnes ;
un moyen de traitement (3) connecté audit moyen d'entrée (2) et à chacune desdites porteuses communes (1), ledit moyen de traitement (3) étant conçu pour recevoir l'information de recherche de personnes issue dudit moyen d'entrée (2), dans lequel ledit moyen de traitement (3) commande lesdites porteuses radio communes (1) pour émettre ladite information de recherche de personnes sur l'une sélectionnée desdites porteuses radio communes (1).

**3.** Système de recherche de personnes selon la revendication 2, dans lequel chacune desdites porteuses radio communes (1) émet ladite information de recherche de personnes sur une fréquence différente.

**4.** Système de recherche de personnes selon la revendication 2 ou 3, dans lequel ledit moyen de traitement (3) comprend un moyen de formatage (205) pour convertir ladite information de recherche de personnes en un format approprié utilisé par celle sélectionnée desdites porteuses radio communes (1).

**5.** Système de recherche de personnes selon l'une quelconque des revendications 2, 3 ou 4, dans lequel ledit moyen d'entrée (2) est un téléphone.

**6.** Système de recherche de personnes selon l'une quelconque des revendications 2, 3, 4 ou 5, dans lequel ledit moyen de traitement (3) comprend un moyen de mémorisation (202, 204) pour mémoriser une pluralité d'enregistrements d'information de recherche de personnes, dans lequel ledit moyen de traitement (3) commande lesdites porteuses radio communes (1) pour émettre ceux sélectionnés des

50

enregistrements d'informations de recherche de personnes mémorisés en réponse à un signal issu dudit moyen d'entrée (2).

7. Système de recherche de personnes selon l'une quelconque des revendications 2 à 6, dans lequel ledit moyen de traitement (3) est un système d'ordinateur.

8. Système de recherche de personnes selon l'une quelconque des revendications 2 à 7, dans lequel ledit moyen récepteur de recherche de personnes (4) comprend un moyen de balayage pour balayer les fréquences émises de chacune desdites porteuses radio communes.

9. Système de recherche de personnes selon l'une quelconque des revendications 1 à 8, dans lequel ledit moyen central de traitement de recherche de personnes comprend :
   un moyen de traitement (6) pour recevoir l'information de recherche de personnes issue desdits moyens locaux de traitement de recherche de personnes;
   un moyen de formatage pour formater ladite information de recherche de personnes dans un format prédéterminé ; et
   un moyen de distribution (12) pour distribuer ladite information de recherche de personnes formatée à toutes les zones géographiques désservies par ledit système de recherche de personnes.

10. Système de recherche de personnes selon la revendication 9, dans lequel lesdits moyens locaux de traitement de recherche de personnes comprennent un moyen récepteur (5) pour recevoir ladite information de recherche de personnes formatée et un moyen de reformatage pour reformater ladite information pour émission dans une zone géographique sélectionnée.

# FIG. 1

# FIG. 2

EP 0 231 259 B1

# FIG. 3

PAGING RECORD FORMAT

```
         1         2         3         4         5         6
123456789012345678901234567890123456789012345678901234567890 1234
CSID.RID.S..D..DATEHMNNNNNNNPPPPPXS..T..THM----B[------I-------]

         7         8         9         0         1         2
567890123456789012345678901234567890123456789012345678901 2345678
[------2-------][------3-------][------4-------][------5-------]
```

# FIG. 5

```
    0        1        2        3        4        5        6        7
 ┌────────┬────────┬────────┬────────┬────────┬────────┬────────┬────────┐
 ¦ P    P ¦ P    P ¦ P    P ¦ A    A ¦ S    A ¦ L    L ¦ R    L ¦ R    R ¦
 ¦ 1    2 ¦ 3    4 ¦ 5    6 ¦ 2    3 ¦ T    1 ¦ 2    3 ¦ 1    1 ¦ 2    3 ¦
 └────────┴────────┴────────┴────────┴────────┴────────┴────────┴────────┘
```

EP 0 231 259 B1

EP 0 231 259 B1

**FIG. 4**

```
            1         2
123456789012345678901
CSID.RID.S..D..DATEHM
```

— MINUTE CODE LETTER ('e'-'(')
— HOUR CODE LETTER
— DATE CODE (HEX)
— DESTINATION SYSTEM CODE (HEX)
— SOURCE SYSTEM CODE (HEX)
— REPEAT TO DEST. PACKET ID CODE
— ORIGINATING PACKET ID CODE
— CONTROL/DATA RECORD FLAG

```
2         3         4         5         6         7         8
23456789012345678901234567890123456789012345678901234567890...
NNNNNNPPPPPXS..T..THM----B[------1------][-----2------]...
```

— FIRST DATA BLOCK
— NUMBER OF DATA BLOCKS
— SPARE BYTES
— MINUTE TRANSMITTED
— HOUR TRANSMITTED
— PAGE TYPE
— THREAD LIST
— SOURCE SYSTEM
— PAGER STATUS
— PAGER CAP-CODE
— PAGER ACCOUNT NUMBER

FIG. 6

FIG. 8

TYPICAL PAGE ACQUISITION SEQUENCE

FIG. 7

EP 0 231 259 B1

# FIG. 9

POWER
SAVE

ANTENNA

900
LOW NOISE
AMPLIFIER

901
BAND PASS
FILTER

902
MIXER

BAND PASS
FILTER
904

IF

903
XTAL LOCAL OSCILLATOR

# FIG. IO

PAGING
SIGNAL FROM
TRANSMITTER
ON
OFF

PAGING SIGNAL ON FREQUENCY 7

A        B    C        D

PAGER
POWER SAVE
SIGNATURE
AWAKE
SLEEP

E                F              G

# FIG. II

LNA        BPF        MIX        BPF        DISCR.

FREQUENCY AGILE
LOCAL OSCILLATOR
"D"

LOGIC

DATA

OLD XTAL
OSCILLATOR
DISCONNECTED

RF POWER
SAVE

MODIFIED RF
POWER SAVE

POWER
(±5,GND)

## FIG. 12

START
↓
LOOK FOR NETWORK PREAMBLE
↓
FIND PREAMBLE? ──YES──→ ... ──→ PAGER ASLEEP? ──NO──→ RECEIVE MESSAGE
│ NO
↓
LAST CHANNEL? ──YES──→ SCANNER SLEEP
│ NO
↓
INCREMENT RF CHANNEL          RESET TO CHANNEL 1

PAGER ASLEEP? ──YES──→ HAS ENOUGH TIME ELAPSED FOR PAGER TO SEE OWN PREAMBLE?
NO
YES ↓
(END OF MSG.)

RECEIVE MESSAGE ↓ BATTERY SAVE MODE?
NO
YES ↓
(END OF MSG.)

## FIG. 13

SECOND & SUBSEQUENT BATCHES

| 2000msec 500 HZ | 1125msec 256 HZ | | | | |
|---|---|---|---|---|---|
| PREAMBLE 1 | PREAMBLE 2 | SC | FIRST BATCH CODEWORDS | SC | . . . . |

EP 0 231 259 B1

# FIG. 14

EP 0 231 259 B1